(19) Europäisches Patentamt
European Patent Office
Office européen des brevets

(11) **EP 4 697 271 A1**

(12) **EUROPEAN PATENT APPLICATION**
published in accordance with Art. 153(4) EPC

(43) Date of publication:
**18.02.2026 Bulletin 2026/08**

(21) Application number: **24838615.3**

(22) Date of filing: **28.06.2024**

(51) International Patent Classification (IPC):
**G06T 9/00** (2006.01)    **H04N 19/91** (2014.01)

(52) Cooperative Patent Classification (CPC):
**G06T 9/00; H04N 19/132; H04N 19/42; H04N 19/91**

(86) International application number:
**PCT/CN2024/102281**

(87) International publication number:
**WO 2025/011360 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.07.2023  CN 202310852061**

(71) Applicant: **Huawei Technologies Co., Ltd.
Shenzhen, Guangdong 518129 (CN)**

(72) Inventors:
• **YU, Dequan
  Shenzhen, Guangdong 518129 (CN)**
• **ZHAO, Yin
  Shenzhen, Guangdong 518129 (CN)**

(74) Representative: **Grünecker Patent- und
Rechtsanwälte
PartG mbB
Leopoldstraße 4
80802 München (DE)**

(54) **ENTROPY ESTIMATION METHOD AND APPARATUS FOR IMAGE COMPRESSION**

(57)    This application provides an entropy estimation method and apparatus for image compression. The method includes: obtaining a to-be-processed first feature matrix, where a shape of the first feature matrix is $[C_{in}, h_{in}, w_{in}]$, $C_{in}$ indicates a quantity of channels of the first feature matrix, $h_{in}$ indicates a height of the first feature matrix, and $w_{in}$ indicates a width of the first feature matrix; and inputting the first feature matrix to an entropy estimation network to obtain a second feature matrix, where a shape of the second feature matrix is $[C_{out}, h_{out}, w_{out}]$, $C_{out}$ indicates a quantity of channels of the second feature matrix, $h_{out}$ indicates a height of the second feature matrix, and $w_{out}$ indicates a width of the second feature matrix. The second feature matrix and the first feature matrix meet the following conditions: $C_{out} = C_{in}$, $h_{out} = s \cdot h_{in}$, and $w_{out} = s \cdot w_{in}$, where s is an integer greater than 1. The entropy estimation network includes a first convolutional layer and a pointwise operation. The first convolutional layer includes two types of convolution processing. One of the two types of convolution processing is two-dimensional group convolution. An input of the pointwise operation is respective outputs of the two types of convolution processing. In this application, compression performance can be improved.

First feature matrix

Third convolutional layer

First activation function

First convolutional layer

Convolution 1   Convolution 2

Pointwise operation

Second activation function

s× upsampling processing

Second feature matrix

FIG. 9

**Description**

**TECHNICAL FIELD**

This application relates to the field of image processing technologies, and in particular, to an entropy estimation method and apparatus for image compression.

**BACKGROUND**

As a convolutional neural network (Convolutional Neural Network, CNN) far outperforms a conventional algorithm in computer vision tasks such as image recognition and object detection, an increasing quantity of researchers start to explore deep learning-based image/video compression methods. Some researchers have designed an end-to-end deep learning-based image/video compression network, including the following modules: an encoding network, an entropy estimation network, an entropy encoding network, an entropy decoding network, a decoding network, and the like. The entropy estimation network is one of basic components of the image/video compression network, and is mainly configured to estimate a probability distribution (a mean or a variance) of a to-be-encoded/decoded signal. Accuracy of estimating the probability distribution by the entropy estimation network directly affects a size of a bitstream, and further affects overall compression performance. Therefore, designing an efficient entropy estimation network is the key to improving image/video compression performance.

**SUMMARY**

Embodiments of this application provide an entropy estimation method and apparatus for image compression, to improve compression performance.

According to a first aspect, this application provides an entropy estimation method for image compression, including: obtaining a to-be-processed first feature matrix, where a shape of the first feature matrix is $[C_{in}, h_{in}, w_{in}]$, $C_{in}$ indicates a quantity of channels of the first feature matrix, $h_{in}$ indicates a height of the first feature matrix, and $w_{in}$ indicates a width of the first feature matrix; and inputting the first feature matrix to an entropy estimation network to obtain a second feature matrix, where a shape of the second feature matrix is $[C_{out}, h_{out}, w_{out}]$, $C_{out}$ indicates a quantity of channels of the second feature matrix, $h_{out}$ indicates a height of the second feature matrix, and $w_{out}$ indicates a width of the second feature matrix. The second feature matrix and the first feature matrix meet the following conditions: $C_{out} = C_{in}$, $h_{out} = s \cdot h_{in}$, and $w_{out} = s \cdot w_{in}$, where s is an integer greater than 1. The entropy estimation network includes a first convolutional layer and a pointwise operation. The first convolutional layer includes two types of convolution processing. One of the two types of convolution processing is two-dimensional group convolution (also referred to as group convolution processing). An input of the pointwise operation is respective outputs of the two types of convolution processing.

In a possible implementation, the second feature matrix and the first feature matrix meet the following conditions: $C_{out} = C_{in}$, $h_{out} = 4h_{in}$, and $w_{out} = 4w_{in}$; and the entropy estimation network sequentially includes a third convolutional layer, a first activation function, the first convolutional layer, the pointwise operation, a second activation function, and $4\times$ upsampling processing.

In this embodiment of this application, in the entropy estimation network, a convolution operation is combined with the pointwise operation to implement a local attention mechanism, and a response at each location in an input feature matrix is modulated by using local information of the feature matrix to improve compression performance. In addition, group convolution may be used to expand a receptive field while reducing an amount of calculation.

According to the foregoing descriptions, the entropy estimation network may obtain an estimated probability value of each feature element through estimation based on an image feature, and the probability value is used for processing by an entropy encoding network and an entropy decoding network. In view of this, the first feature matrix may be a feature matrix obtained by processing an original image through an encoding network and then quantizing a processed image. For example, the first feature matrix may be expressed as *input* $[C_{in}, h_{in}, w_{in}]$, where $C_{in}$ indicates the quantity of channels of the first feature matrix, $h_{in}$ indicates the height of the first feature matrix, and $w_{in}$ indicates the width of the first feature matrix, that is, $[C_{in}, h_{in}, w_{in}]$ indicates the shape (shape) of the first feature matrix.

The second feature matrix may be expressed as *output* $[C_{out}, h_{out}, w_{out}]$, where $C_{out}$ indicates the quantity of channels of the second feature matrix, $h_{out}$ indicates the height of the second feature matrix, and $w_{out}$ indicates the width of the second feature matrix, that is, $[C_{out}, h_{out}, w_{out}]$ indicates the shape (shape) of the second feature matrix.

In this embodiment of this application, the second feature matrix and the first feature matrix meet the following conditions:

$$C_{out} = C_{in}$$

$$h_{out} = s \cdot h_{in}$$

$$w_{out} = s \cdot w_{in}$$

s is an integer greater than 1, and indicates a stride (stride) of a sliding window. Optionally, s=4.

The entropy estimation network sequentially includes the third convolutional layer, the first activation function, the first convolutional layer, the pointwise operation, the second activation function, and s× upsampling processing. The first convolutional layer includes the two types of convolution processing, and the input of the pointwise operation is the respective outputs of the two types of convolution processing.

An input feature matrix of any one of the foregoing convolutional layers obtains, through a convolution operation, an output feature matrix with an unchanged height and width, and the output feature matrix may be considered as a local response of the input feature matrix. The convolution operation may be expressed as the following formula:

$$Conv(x) = \sum w * x + b$$

w is a weight of the convolutional layer, b is a bias parameter of the convolutional layer, and both w and b are learnable parameters that are not limited.

Any one of the foregoing activation operations is a pointwise operation. To be specific, an independent mapping operation is performed on each element of the input feature matrix. The activation operation may be an identity operation (Identity), a rectified linear unit (Rectified Linear Unit, ReLU), a leaky rectified linear unit (LeakyReLU), a parametric rectified linear unit (Parametric Rectified Linear Unit, PReLU), Sigmoid, Tanh, or the like, and may provide a linear or nonlinear transformation characteristic. In this embodiment of this application, the first activation function and the second activation function may be a same operation or different operations. This is not specifically limited. It should be noted that the activation function may alternatively be another variant of the ReLU. This is not specifically limited in this embodiment of this application.

The pointwise operation may include pointwise multiplication, pointwise addition, pointwise subtraction, or pointwise division. The input of the pointwise operation is respective output feature matrices of the two types of convolution processing at the first convolutional layer. Sizes of the two output feature matrices are the same, and the pointwise operation performs multiplication, addition, subtraction, or division between element values at corresponding locations. The convolution operation is combined with the pointwise operation to implement the local attention mechanism, and the response at each location in the input feature matrix is modulated by using the local information of the feature matrix.

In this embodiment of this application, the s× upsampling processing may be implemented in a plurality of manners.

(1) The s× upsampling processing sequentially includes a second convolutional layer and an s× pixel shuffle layer.

An eighth feature matrix is input to the second convolutional layer, and a ninth feature matrix is output. Sizes of the ninth feature matrix and the eighth feature matrix are the same, but a quantity of channels of the ninth feature matrix is n times of the quantity of channels of the first feature matrix. The ninth feature matrix is input to the pixel shuffle layer, and the second feature matrix is output. The height of the second feature matrix is s times of a height of the ninth feature matrix. The width of the second feature matrix is s times of a width of the ninth feature matrix. The quantity of channels of the second feature matrix is 1/n of the quantity of channels of the ninth feature matrix, and is the same as the quantity of channels of the first feature matrix. Optionally, $n=s^2$.

The pixel shuffle layer, also referred to as a subpixel convolution layer, is expressed as *P*ixelShuffle(s), where s>1. The pixel shuffle layer may rearrange elements in an input feature matrix (in a shape of $[C_4, h_4, w_4]$) to obtain an output feature matrix (in a shape of $[C_{out}, h_{out}, w_{out}]$), where $h_{out} = s \cdot h_4$, $w_{out} = s \cdot w_4$, and $C_{out} = C_4/s^2$.

At a last layer of the entropy estimation network, upsampling is performed by using the pixel shuffle layer, and only a memory operation may need to be performed. Therefore, adaptability to different hardware is high (for example, the memory operation may be converted into a convolution operation on an AI accelerator as needed), and the memory operation may even be performed in combination with a subsequent step to combine memory access, to improve overall encoding/decoding efficiency.

(2) The s× upsampling processing sequentially includes a second convolutional layer and a deconvolutional layer for s× upsampling.

An eighth feature matrix is input to the second convolutional layer, and a ninth feature matrix is output. Sizes of the ninth feature matrix and the eighth feature matrix are the same, but a quantity of channels of the ninth feature matrix is n times of the quantity of channels of the first feature matrix. The ninth feature matrix is input to the deconvolutional layer for s× upsampling, and the second feature matrix is output. The height of the second feature matrix is s times of a height of the ninth feature matrix. The width of the second feature matrix is s times of a width of the ninth feature matrix. The quantity of channels of the second feature matrix is 1/n of the quantity of channels of the ninth feature matrix, and is the same as the quantity of channels of the first feature matrix. Optionally, $n=s^2$.

(3) The s× upsampling processing includes a deconvolutional layer for s× upsampling.

An eighth feature matrix is input to the deconvolutional layer for s× upsampling, and the second feature matrix is output. The height of the second feature matrix is s times of a height of the eighth feature matrix. The width of the second feature matrix is s times of a width of the eighth feature matrix. The quantity of channels of the second feature matrix is 1/n of a quantity of channels of the eighth feature matrix, and is the same as the quantity of channels of the first feature matrix. Optionally, $n=s^2$.

(4) The s× upsampling processing includes a second convolutional layer and two (s/2)× pixel shuffle layers.

An eighth feature matrix is input to the second convolutional layer, and a ninth feature matrix is output. Sizes of the ninth feature matrix and the eighth feature matrix are the same, but a quantity of channels of the ninth feature matrix is n times of the quantity of channels of the first feature matrix. The ninth feature matrix is input to a 1st (s/2)× pixel shuffle layer, and a tenth feature matrix is output. A height of the tenth feature matrix is s/2 times of a height of the ninth feature matrix. A width of the tenth feature matrix is s/2 times of a width of the ninth feature matrix. A quantity of channels of the tenth feature matrix is n/2 of the quantity of channels of the ninth feature matrix. The tenth feature matrix is input to a 2nd (s/2)× pixel shuffle layer, and an eleventh feature matrix is output. A height of the eleventh feature matrix is s/2 times of the height of the tenth feature matrix. A width of the eleventh feature matrix is s/2 times of the width of the tenth feature matrix. A quantity of channels of the eleventh feature matrix is n/2 of the quantity of channels of the tenth feature matrix, and is the same as the quantity of channels of the first feature matrix. Optionally, $n=s^2$.

It should be noted that, in addition to the foregoing several implementations, the s× upsampling processing may alternatively be implemented in another manner. Provided that the height of the second feature matrix is s times of the height of the eighth feature matrix, the width of the second feature matrix is s times of the width of the eighth feature matrix, and the quantity of channels of the second feature matrix is the same as the quantity of channels of the first feature matrix, any implementation may be used as an implementation of the s× upsampling processing. This is not specifically limited in this embodiment of this application.

In a possible implementation, one of two types of convolution at the first convolutional layer may be a two-dimensional group convolutional layer (also referred to as a group convolutional layer). Group convolution is expressed as $CONV(K_{ver} * K_{hor}, C_1, C_2, G, t\downarrow)$. A size of an input feature matrix of the convolutional layer is $[C_1, h_1, w_1]$, and a size of an output feature matrix of the convolutional layer is $[C_2, h_2, w_2]$, where $h_1 = t \cdot h_2$, and $w_1 = t \cdot w_2$. G indicates a quantity of groups, and controls a connection between the input feature matrix and the output feature matrix. $C_1$ and $C_2$ are exactly divisible by G, and t indicates a stride of a sliding window. No spatial resolution change is "executed" without a stride parameter. In the entropy estimation network, the group convolution may be used to expand a receptive field while reducing an amount of calculation.

In this embodiment of this application, the entropy estimation network may include a variance prediction network and a mean prediction network. Input feature matrices (namely, first feature matrices) of the two networks may be the same, and output feature matrices of the two networks are different. An output feature matrix of the variance prediction network may be referred to as a variance matrix, and an output feature matrix of the mean prediction network may be referred to as a mean matrix. Structures of the two networks are similar. A difference is as follows: Because a variance is a positive number but a mean is not limited thereto, any convolutional layer in the variance prediction network is a quantized convolutional layer, and an absolute value operation is set inside or outside the convolutional layer, to ensure a positive-number characteristic of the variance.

Quantized convolution may be expressed as $qCONV(K_{ver} * K_{hor}, C_5, C_6, G, q \downarrow, d, p)$. During convolution, a feature matrix in a shape of $[C_5, h_5, w_5]$ is received, and a feature matrix in a shape of $[C_6, h_6, w_6]$ is output, where $h_6 = q \cdot h_5$, and $w_6 = q \cdot w_5$. q indicates a convolution stride, a default value of the stride is 1, and a corresponding output has a same spatial resolution. d is a non-negative integer, and defines a maximum value of an element of a clipped input feature matrix. $p[c_7]$ includes a scale factor and a translation factor of each channel of the output feature matrix.

Optionally, an input of the entropy estimation network is the first feature matrix. First, 1×1 convolution (the first convolutional layer, at which a size of a convolution kernel is 1×1) is performed. Then an activation function a (the first activation function, for example, the ReLU or the LeakyReLU) is performed. Then two types of convolution are performed: (the second convolutional layer): 1×1 convolution and 3×3 group convolution (group convolution). Then a pointwise operation is performed on respective outputs of the two types of convolution. Then an activation function b (the second activation function, for example, the ReLU or the LeakyReLU) is performed. Then a quantity of channels is upscaled to 16 times of the quantity of channels of the first feature matrix through 1×1 convolution. Finally, the quantity of channels is downscaled by 16 times through PixelShuffle(4) with 4× sampling, and a height and a width separately undergo 4× sampling, to obtain a final output, namely, the second feature matrix.

According to a second aspect, this application provides an entropy estimation apparatus for image compression, including: an obtaining module, configured to obtain a to-be-processed first feature matrix, where a shape of the first feature matrix is $[C_{in}, h_{in}, w_{in}]$, $C_{in}$ indicates a quantity of channels of the first feature matrix, $h_{in}$ indicates a height of the first feature matrix, and $w_{in}$ indicates a width of the first feature matrix; and a processing module, configured to input the first feature matrix to an entropy estimation network to obtain a second feature matrix, where a shape of the second feature matrix is $[C_{out}, h_{out}, w_{out}]$, $C_{out}$ indicates a quantity of channels of the second feature matrix, $h_{out}$ indicates a height of the second feature matrix, and $w_{out}$ indicates a width of the second feature matrix. The second feature matrix and the first feature matrix meet the following conditions: $C_{out} = C_{in}$, $h_{out} = s \cdot h_{in}$, and $w_{out} = s \cdot w_{in}$, where s is an integer greater than 1. The entropy estimation network includes a first convolutional layer and a pointwise operation. The first convolutional layer includes two types of convolution processing. One of the two types of convolution processing is two-dimensional group convolution. An input of the pointwise operation is respective outputs of the two types of convolution processing.

In a possible implementation, an input feature matrix and an output feature matrix of the two-dimensional group convolution meet the following conditions: $h_1 = t \cdot h_2$, $w_1 = t \cdot w_2$, and $C_1$ and $C_2$ are exactly divisible by G, where t is an integer greater than 1, $C_1$ indicates a quantity of channels of the input feature matrix, $h_1$ indicates a height of the input feature matrix, $w_1$ indicates a width of the input feature matrix, $C_2$ indicates a quantity of channels of the output feature matrix, $h_2$ indicates a height of the output feature matrix, $w_2$ indicates a width of the output feature matrix, and G indicates a quantity of groups, and is used to control a connection between the input feature matrix and the output feature matrix.

In a possible implementation, the entropy estimation network further includes s× upsampling processing.

In a possible implementation, the s× upsampling processing sequentially includes a second convolutional layer and a pixel shuffle layer. A third feature matrix output by the second convolutional layer and the first feature matrix meet the following conditions: $C_3 = nC_{in}$, $h_3 = h_{in}$, and $w_3 = w_{in}$, where n is an integer greater than 1, $C_3$ indicates a quantity of channels of the third feature matrix, $h_3$ indicates a height of the third feature matrix, and $w_3$ indicates a width of the third feature matrix. The pixel shuffle layer is configured to separately perform upsampling on the height and the width of the third feature matrix. A feature matrix output by the pixel shuffle layer is the second feature matrix.

In a possible implementation, the s× upsampling processing sequentially includes a second convolutional layer and a deconvolutional layer for s× upsampling. A third feature matrix output by the second convolutional layer and the first feature matrix meet the following conditions: $C_3 = nC_{in}$, $h_3 = h_{in}$, and $w_3 = w_{in}$, where n is an integer greater than 1, $C_3$ indicates a quantity of channels of the third feature matrix, $h_3$ indicates a height of the third feature matrix, and $w_3$ indicates a width of the third feature matrix. The deconvolutional layer is configured to separately perform upsampling on the height and the width of the third feature matrix. A feature matrix output by the deconvolutional layer is the second feature matrix.

In a possible implementation, the s× upsampling processing includes a deconvolutional layer for s× upsampling. The deconvolutional layer is configured to separately perform upsampling on a height and a width of an input feature matrix. A feature matrix output by the deconvolutional layer is the second feature matrix.

In a possible implementation, the entropy estimation network further includes a first activation function and a second activation function. The first activation function and the second activation function each include an identity operation Identity, rectified linear unit ReLU processing, leaky rectified linear unit LeakyReLU processing, or parametric rectified linear unit PReLU processing.

In a possible implementation, the pointwise operation includes pointwise multiplication, pointwise addition, pointwise subtraction, or pointwise division.

In a possible implementation, the entropy estimation network further includes a third convolutional layer. An input feature matrix of the third convolutional layer is the first feature matrix.

According to a third aspect, an embodiment of this application provides an encoder, including: one or more processors; and a non-transitory computer-readable storage medium, coupled to the processor and storing a program to be executed by the processor, where when the program is executed by the processor, the encoder is enabled to perform the method according to any one of the implementations of the first aspect. Optionally, after obtaining a second feature matrix, the processor of the encoder is further configured to perform entropy encoding based on the second feature matrix to obtain a bitstream. The encoder further includes a communication interface, configured to send the bitstream.

According to a fourth aspect, an embodiment of this application provides a decoder, including: one or more processors; and a non-transitory computer-readable storage medium, coupled to the processor and storing a program to be executed by the processor, where when the program is executed by the processor, the decoder is enabled to perform the method according to any one of the implementations of the first aspect. Optionally, after obtaining a second feature matrix, the processor of the decoder is further configured to perform entropy decoding based on the second feature matrix to obtain a reconstructed image or video. The decoder further includes a communication interface, configured to receive a to-be-decoded video bitstream.

According to a fifth aspect, an embodiment of this application provides a computer program product including program code. When the program code is executed on a computer or a processor, the computer program product is configured to perform the method according to any one of the implementations of the first aspect.

According to a sixth aspect, an embodiment of this application provides a computer-readable storage medium, including instructions. When the instructions are run on a computer, the computer is enabled to perform the method according to any one of the implementations of the first aspect.

According to a seventh aspect, an embodiment of this application provides a chip, including one or more interface circuits and one or more processors. The interface circuit is configured to receive a signal and/or send a signal. The signal includes computer instructions stored in a memory. When executing the computer instructions, the processor is configured to implement the method according to any one of the implementations of the first aspect.

According to an eighth aspect, an embodiment of this application provides a system for transmitting a video bitstream, including: an obtaining apparatus, configured to obtain a video bitstream, where the video bitstream is obtained through encoding by the encoder according to the third aspect; and a transmission apparatus, configured to transmit the video bitstream.

According to a ninth aspect, an embodiment of this application provides a method for storing a video bitstream, where the video bitstream is obtained through encoding by the encoder according to the third aspect.

According to a tenth aspect, an embodiment of this application provides an apparatus for storing a video bitstream, including: a communication interface, configured to obtain a video bitstream, where the video bitstream is obtained through encoding by the encoder according to the third aspect; and a memory, configured to store the video bitstream.

According to an eleventh aspect, an embodiment of this application provides a method for sending a video bitstream, where the video bitstream is obtained through encoding by the encoder according to the third aspect.

According to a twelfth aspect, an embodiment of this application provides a system for sending a video bitstream, including: an obtaining apparatus, configured to obtain a video bitstream, where the video bitstream is obtained through encoding by the encoder according to the third aspect; and a communication interface, configured to send the video bitstream to a destination device.

## BRIEF DESCRIPTION OF DRAWINGS

FIG. 1 is an example diagram of a typical deep learning-based image compression framework;
FIG. 2 is an example diagram of a typical deep learning-based video compression framework;
FIG. 3 is an example diagram of an application scenario of image/video storage/transmission;
FIG. 4 is an example diagram of an application scenario of image/video storage;
FIG. 5 is an example diagram of a Huawei Cloud application scenario;
FIG. 6 is a diagram of an operating process of a streaming media system to which embodiments of this application are applicable;
FIG. 7 is a diagram of an architecture of a streaming media system according to an embodiment of this application;
FIG. 8 is a flowchart of a process 800 of an entropy estimation method for image compression according to an embodiment of this application;
FIG. 9 is a diagram of a structure of an entropy estimation network according to an embodiment of this application;
FIG. 10a is a diagram of a structure of a variance prediction network for entropy estimation;
FIG. 10b is a diagram of a structure of a mean prediction network for entropy estimation;
FIG. 11a is a diagram of a structure of a variance prediction network for entropy estimation;
FIG. 11b is a diagram of a structure of a mean prediction network for entropy estimation;
FIG. 12a is a diagram of a structure of a variance prediction network for entropy estimation;
FIG. 12b is a diagram of a structure of a mean prediction network for entropy estimation;
FIG. 13a is a diagram of a structure of a variance prediction network for entropy estimation;
FIG. 13b is a diagram of a structure of a mean prediction network for entropy estimation;
FIG. 14 is a diagram of an entropy estimation apparatus 1400 for image compression according to an embodiment of this application; and
FIG. 15 is a diagram of a structure of an electronic device according to an embodiment of this application.

## DESCRIPTION OF EMBODIMENTS

To make the objectives, technical solutions, and advantages of this application clearer, the following clearly and describes the technical solutions in this application with reference to the accompanying drawings in this application. Clearly, the described embodiments are merely some but not all of embodiments of this application. All other embodiments obtained by a person of ordinary skill in the art based on embodiments of this application without creative efforts shall fall within the protection scope of this application.

In embodiments of this specification, the claims, and the accompanying drawings of this application, the terms "first", "second", and the like are merely intended for differentiation in descriptions, but shall not be construed as indicating or implying relative importance or indicating or implying a sequence. In addition, the terms "include", "have", and any variant thereof are intended to cover a non-exclusive inclusion, for example, include a series of steps or units. A method, system, product, or device is not necessarily limited to those steps or units that are clearly listed, but may include other steps or units that are not clearly listed or are inherent to the process, method, product, or device.

It should be understood that, in this application, "at least one" means one or more, and "a plurality of" means two or more. "And/or" describes an association relationship between associated objects, and indicates that three relationships may exist. For example, "A and/or B" may indicate the following three cases: Only A exists, only B exists, and both A and B exist, where A and B may be in a singular form or a plural form. The character "/" usually indicates an "or" relationship between the associated objects. "At least one of the following items (pieces)" or a similar expression thereof indicates any combination of the items, including one of the items (pieces) or any combination of a plurality of the items (pieces). For example, at least one of a, b, or c may indicate a, b, c, "a and b", "a and c", "b and c", or "a, b, and c", where a, b, and c may be in a singular form or a plural form.

Embodiments of this application relate to application of a neural network. Therefore, for ease of understanding, the following first describes related nouns or terms used in embodiments of this application.

1. Neural network

A neural network (neural network, NN) is a machine learning model. The neural network may include a neuron. The neuron may be an operation unit that uses $x_s$ and an intercept of 1 as an input. An output of the operation unit may be shown in a formula (1):

$$h_{W,b}(x) = f(W^T x) = f(\sum_{s=1}^{n} W_s x_s + b) \qquad (1)$$

s=1, 2, ..., or n, n is a natural number greater than 1, $W_s$ is a weight of $x_s$, and b is a bias of the neuron. f is an activation function (activation function) of the neuron, and is used to introduce a nonlinear characteristic into the neural network, to convert an input signal in the neuron into an output signal. The output signal of the activation function may serve as an input of a next convolutional layer. The activation function may be a nonlinear function, for example, a ReLU. The neural network is a network formed by connecting many individual neurons together. To be specific, an output of a neuron may be an input of another neuron. An input of each neuron may be connected to a local receptive field (local receptive field) of a previous layer to extract a feature of the local receptive field. The local receptive field may be an area including several neurons.

2. Multi-layer perceptron (multi-layer perceptron, MLP)

An MLP is a simple deep neural network (deep neural network, DNN) (different layers are fully connected), and is also referred to as a multi-layer neural network. The MLP may be understood as a neural network including many hidden layers. There is no special metric criterion for the "many" herein. The DNN is divided based on locations of different layers, and a neural network in the DNN may be divided into three types: an input layer, a hidden layer, and an output layer. Usually, a 1st layer is the input layer, a last layer is the output layer, and all intermediate layers are hidden layers. Layers are fully connected. To be specific, any neuron at an $i^{th}$ layer is necessarily connected to any neuron at an $(i+1)^{th}$ layer. Although the DNN seems complex, an operation at each layer is not complex, and is simply expressed by the following linear relationship expression: $\vec{y} = \alpha(W\vec{x} + \vec{b})$, where $\vec{x}$ is an input vector, $\vec{y}$ is an output vector, $\vec{b}$ is an offset vector, W is a weight matrix (also referred to as a coefficient), and $\alpha()$ is an activation function. At each layer, the output vector $\vec{y}$ is obtained merely by performing such a simple operation on the input vector $\vec{x}$. Because the DNN includes many layers, there are also a large quantity of coefficients W and offset vectors b. These parameters in the DNN are defined as follows: The coefficient W is used as an example. It is assumed that, in a three-layer DNN, a linear coefficient from a 4th neuron at a 2nd layer to a 2nd neuron at a 3rd layer is defined as $W_{24}^{3}$. The superscript 3 indicates a layer at which the coefficient W is located, and the subscript corresponds to an output third-layer index 2 and an input second-layer index 4. To sum up, a coefficient from a $k^{th}$ neuron at an $(L-1)^{th}$ layer to a $j^{th}$ neuron at an $L^{th}$ layer is defined as $W_{jk}^{L}$. It should be noted that the input layer does not have the W parameter. In the deep neural network, a larger quantity of hidden layers enables the network to better describe a complex case in the real world. Theoretically, a model with more parameters has higher complexity and a larger "capacity". This means that the model can complete a more complex learning task. Training for the deep neural network is a process of learning a weight matrix, and a final objective of the training is to obtain a weight matrix (a weight matrix including vectors W of many layers) for all layers of a trained deep neural network.

3. Convolutional neural network

A convolutional neural network (convolutional neural network, CNN) is a deep neural network with a convolutional structure and is a deep learning (deep learning) architecture. In the deep learning architecture, multi-layer learning is performed at different abstraction layers through a machine learning algorithm. As a deep learning architecture, the CNN is a feed-forward (feed-forward) artificial neural network. Neurons in the feed-forward artificial neural network may respond to an image input to the feed-forward artificial neural network. The convolutional neural network includes a feature extractor that includes a convolutional layer and a pooling layer. The feature extractor may be considered as a filter. A convolution process may be considered as using a trainable filter to perform convolution on an input image or a convolutional feature plane (feature map).

The convolutional layer is a neuron layer that is in the convolutional neural network and at which convolution processing is performed on an input signal. The convolutional layer may include a plurality of convolution operators. The convolution operator is also referred to as a kernel. In image processing, the convolution operator is equivalent to a filter for extracting specific information from an input image matrix. The convolution operator may be essentially a weight matrix, and the weight matrix is usually predefined. During a convolution operation on an image, the weight matrix usually processes pixels on an input image along a horizontal direction at a granularity of one pixel (or two pixels or the like, depending on a value of a stride (stride)), to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, no single weight matrix is used, but a plurality of weight matrices with a same size (rows×columns), namely, a plurality of matrices of a same type, are used. Outputs of all of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and still another weight matrix is used to blur unnecessary noise in the image. The plurality of weight matrices have a same size (rows×columns). Feature maps extracted from the plurality of weight matrices with the same size also have a same size. Then the plurality of extracted feature maps with the same size are combined into an output of the convolution operation. Weight values in these weight matrices need to be obtained through massive training during actual application. Each weight matrix including weight values obtained through training may be used to extract information from the input image, to enable the convolutional neural network to perform correct prediction. When the convolutional neural network has a plurality of convolutional layers, a larger quantity of general features are usually extracted at an initial convolutional layer. The general features may also be referred to as low-level features. With an increase in a depth of the convolutional neural network, a feature extracted at a later convolutional layer is more complex, for example, is a high-level semantic feature. A feature with higher-level semantics is more suitable for a to-be-resolved problem.

A quantity of training parameters usually needs to be reduced. Therefore, a pooling layer usually needs to be periodically introduced after a convolutional layer. One convolutional layer may be followed by one pooling layer, or a plurality of convolutional layers may be followed by one or more pooling layers. During image processing, the pooling layer is only used to reduce a spatial size of the image. The pooling layer may include an average pooling operator and/or a max pooling operator, to perform sampling on the input image to obtain an image with a small size. The average pooling operator may be used to perform calculation on pixel values in the image within a specific range to generate an average value as a result of average pooling. The max pooling operator may be used to select a pixel with a largest value within a specific range as a max pooling result. In addition, similar to that the size of the weight matrix at the convolutional layer should be related to the size of the image, an operator at the pooling layer should also be related to the size of the image. A size of a processed image output by the pooling layer may be less than a size of an image input to the pooling layer. Each pixel in the image output by the pooling layer indicates an average value or a maximum value of a corresponding sub-area of the image input to the pooling layer.

After processing is performed at the convolutional layer or the pooling layer, the convolutional neural network is not ready to output needed output information. A reason is as follows: As described above, at the convolutional layer or the pooling layer, only a feature is extracted, and a quantity of parameters resulting from the input image is reduced. However, to generate final output information (needed class information or other related information), the convolutional neural network needs to generate, through a neural network layer, an output of one needed class or outputs of a group of needed classes. Therefore, the neural network layer may include a plurality of hidden layers. Parameters included in the plurality of hidden layers may be obtained through pre-training based on related training data of a specific task type. For example, the task type may include image recognition, image classification, or super-resolution image reconstruction.

Optionally, the neural network layer further includes an output layer of the entire convolutional neural network after the plurality of hidden layers. The output layer has a loss function similar to a categorical cross-entropy, and the loss function is specifically used to calculate a prediction error. When forward propagation of the entire convolutional neural network is completed, back propagation is started to update weight values and deviations of the layers mentioned above, to reduce a loss of the convolutional neural network and an error between a result output by the convolutional neural network through the output layer and an ideal result.

4. Recurrent neural network

A recurrent neural network (recurrent neural network, RNN) is used to process sequence data. In a conventional neural network model, layers from an input layer to a hidden layer and then to an output layer are fully connected, but nodes at each layer are not connected. This common neural network helps resolve many problems, but is still incapable of resolving many other problems. For example, to predict a next word in a sentence, a previous word usually needs to be used, because the previous word and the next word in the sentence are not independent of each other. A reason why the RNN is referred to as the recurrent neural network is that a current output of a sequence is also related to a previous output of the sequence. A specific representation form is that the network memorizes previous information and applies the previous information to calculation of the current output. To be specific, nodes at the hidden layer are connected to each other, and an input of the hidden layer not only includes an output of the input layer, but also includes an output of the hidden layer at a previous moment. Theoretically, the RNN can process sequence data of any length. Training for the RNN is the same as training for a conventional CNN or DNN. An error back propagation algorithm is also used. However, a difference lies in that, if the RNN is expanded, a parameter, for example, W, of the RNN is shared. This is different from the conventional neural network described in the foregoing example. In addition, during use of a gradient descent algorithm, an output in each step depends not only on a network in a current step, but also on a network status in several previous steps. This learning algorithm is referred to as a back propagation through time (Back propagation Through Time, BPTT) algorithm.

Why is the recurrent neural network still needed when the convolutional neural network is available? A reason is simple. In the convolutional neural network, it is assumed that elements are independent of each other, and an input and an output, for example, a cat and a dog, are also independent of each other. However, in the real world, many elements are connected to each other. For example, stocks change over time. For another example, a person says: "I like traveling, and my favorite place is Yunnan. I will go there when I have a chance." Herein, people should know that the person will go to "Yunnan". This is because people perform inference from a context. However, how does a machine do that? In this case, the RNN emerges correspondingly. The RNN is intended to make a machine capable of memorizing like a human. Therefore, an output of the RNN needs to depend on current input information and historical memorized information.

5. Loss function

During training for a deep neural network, because an output of the deep neural network is expected to be close, as much as possible, to a predicted value that is actually expected, a predicted value of a current network may be compared with a target value that is actually expected, and then a weight vector of each layer of the neural network is updated based on a difference between the predicted value and the target value (certainly, before a $1^{st}$ update, an initialization process is usually performed, to be specific, parameters are preconfigured for all layers of the deep neural network). For example, if the predicted value of the network is large, the weight vector is adjusted to decrease the predicted value, and adjustment is continuously performed until the deep neural network can obtain, through prediction, the target value that is actually expected or a value that is quite close to the target value that is actually expected. Therefore, "how to obtain, through comparison, a difference between a predicted value and a target value" needs to be predefined. This is the loss function (loss function) or an objective function (objective function). The loss function and the objective function are important equations for measuring a difference between a predicted value and a target value. The loss function is used as an example. A larger output value (loss) of the loss function indicates a greater difference. Therefore, the training for the deep neural network is a process of minimizing the loss.

6. Back propagation algorithm

During training, a convolutional neural network may modify a value of a parameter in an initial super-resolution model by using an error back propagation (back propagation, BP) algorithm, so that a reconstruction error loss of the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, for example, a weight matrix, of an optimal super-resolution model.

7. Generative adversarial network

A generative adversarial network (generative adversarial network, GAN) is a deep learning model. The model includes at least two modules. One module is a generative model (Generative Model), and the other module is a discriminative model (Discriminative Model). Learning is performed through gaming between the two modules, to generate a better output. Both the generative model and the discriminative model may be neural networks, and may be specifically deep neural networks or convolutional neural networks. A basic principle of the GAN is as follows: A GAN for generating a picture is used as an example. It is assumed that there are two networks: G (Generator) and D (Discriminator). G is a network for generating a picture. G receives random noise z, and generates a picture based on the noise, where the picture is denoted as G(z). D is a discriminative network for determining whether a picture is "real". An input parameter of D is x, where x indicates a picture. An output D(x) indicates a probability that x is a real picture. A value of D(x) being 1 indicates that the picture is 130% a real picture. A value of D(x) being 0 indicates that the picture cannot be a real picture. During training for the generative adversarial network, an objective of the generative network G is to generate a picture that is as real as possible to deceive the discriminative network D, and an objective of the discriminative network D is to distinguish between the picture generated by G and a real picture. In this way, G and D constitute a dynamic "gaming" process, namely, an "adversarial" process in the "generative adversarial network". A final gaming result is as follows: In an ideal state, G may generate a picture G(z) that "seems real", and it is difficult for D to determine whether the picture generated by G is real, to be specific, D(G(z))=0.5. In this way, a superb generative model G is obtained, and may be used to generate a picture.

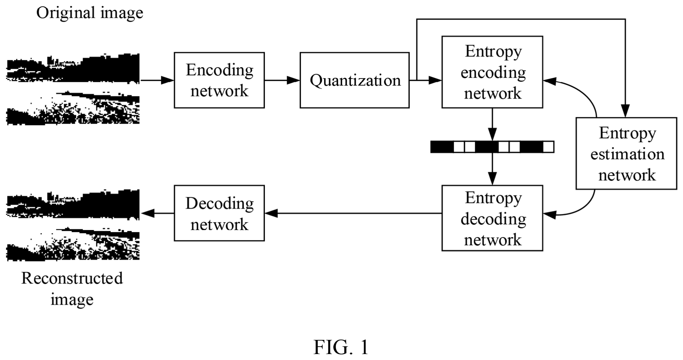

FIG. 1 is an example diagram of a typical deep learning-based image compression framework. As shown in FIG. 1, the image compression framework is an implementation solution of a current artificial intelligence (Artificial Intelligence, AI)-based image compression technology.

On an encoder side, an original image is transformed from image domain to feature domain through processing by an encoding network. A transformed image feature is encoded into a to-be-transmitted or to-be-stored bitstream through processing by a quantization module and an entropy encoding network. On a decoder side, a bitstream is decoded into an image feature through processing by an entropy decoding network. The image feature is transformed from feature domain to image domain through processing by a decoding network, to obtain a reconstructed image. An entropy estimation network obtains an estimated probability value of each feature element through estimation based on the image feature, and the probability value is used for processing by the entropy encoding network and the entropy decoding network.

In this embodiment, both the encoding network (Encoder) and the decoding network (Decoder) include a nonlinear transformation unit.

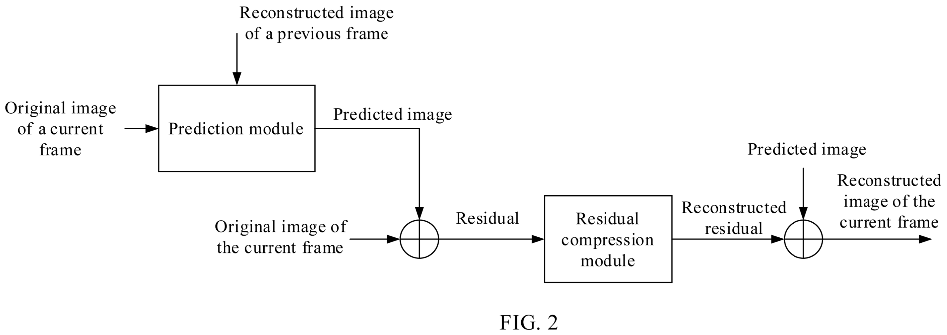

FIG. 2 is an example diagram of a typical deep learning-based video compression framework. As shown in FIG. 2, the video compression framework includes a prediction module (predict model) and a residual compression (residual compress) module.

The prediction module performs prediction on a current frame by using a reconstructed image of a previous frame to obtain a predicted image. The residual compression module compresses a residual between an original image and the predicted image of the current frame, decompresses a compressed residual to obtain a reconstructed residual, and sums up the reconstructed residual and the predicted image to obtain a reconstructed image of the current frame. Both an encoding sub-network and a decoding sub-network in the prediction module and the residual compression module include a nonlinear transformation unit.

In this embodiment, both the prediction module (predict model) and the residual compression (residual compress) module include a nonlinear transformation unit.

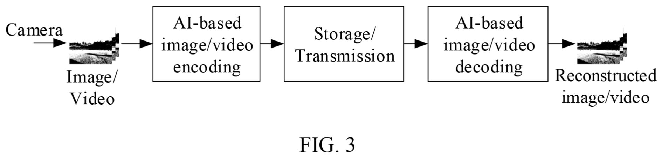

FIG. 3 is an example diagram of an application scenario of image/video storage/transmission. As shown in FIG. 3, the application scenario may be a service related to image/video capture, storage, or transmission in a terminal, Huawei Cloud, or video surveillance, for example, photographing/video recording by a terminal, a terminal album, a Huawei Cloud album, or video surveillance.

Encoder side: A camera (Camera) captures an image/video. An AI-based image/video encoding network performs feature extraction on the image/video to obtain an image feature with low redundancy, and then performs compression based on the image feature to obtain a bitstream/image file.

Decoder side: When a reconstructed image/video needs to be output, an AI-based image/video decoding network decompresses a bitstream/image file to obtain an image feature, and then performs inverse feature extraction on the image feature to obtain a reconstructed image/video.

A storage/transmission module stores (for example, for photographing by a terminal, video surveillance, or a cloud server) or transmits (for example, for a cloud service or a live streaming technology), for different services, the bitstream/image file obtained through compression.

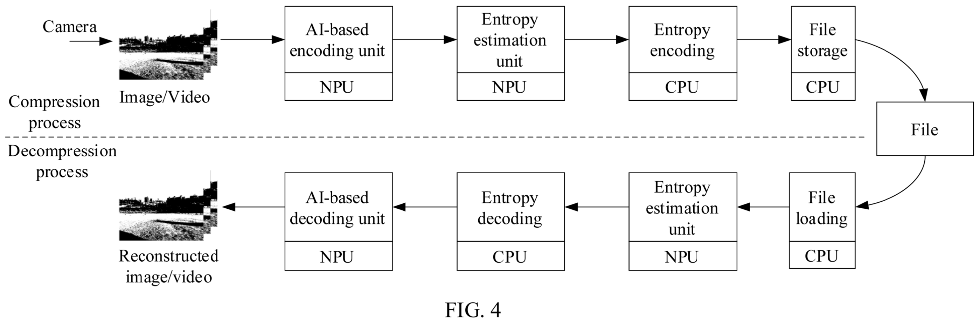

FIG. 4 is an example diagram of an application scenario of image/video storage. As shown in FIG. 4, the application scenario may be a terminal album, Cyberverse (a new virtual-reality integration-based "digital reality" technology unveiled by Huawei), a Huawei Cloud album, video surveillance, live streaming, or the like.

Encoder side: A camera captures a digital image/video. An AI-based encoding unit transforms the image/video into an image feature with lower redundancy. The AI-based encoding unit usually includes a nonlinear transformation unit and has a nonlinear characteristic. An entropy estimation unit is responsible for calculating an encoding probability of each piece of data in the image feature. An entropy encoding network performs lossless encoding on the image feature based on the probability corresponding to each piece of data, to obtain a bitstream/image file. This further reduces an amount of data transmitted during image compression. A storage module stores the bitstream/image file to a corresponding storage location on a terminal.

Decoder side: A loading module loads a bitstream/image file from a corresponding storage location on a terminal, and inputs the bitstream/image file to an entropy decoding network. An entropy estimation unit is responsible for calculating a decoding probability of each piece of data in an image feature. An entropy decoding network performs lossless decoding on the bitstream/image file based on the probability corresponding to each piece of data, to obtain a reconstructed image feature. An AI-based decoding unit performs inverse transformation on the image feature output by entropy decoding, and parses the image feature into a reconstructed image/video. Corresponding to the AI-based encoding unit, the AI-based decoding unit usually includes a nonlinear transformation unit and has a nonlinear characteristic.

Optionally, the AI-based encoding unit, the AI-based decoding unit, and the entropy estimation unit may be network processing units (Network Processing Unit, NPU), and the entropy encoding network, the entropy decoding network, the storage module, and the loading module may be central processing units (Central Processing Unit, CPU).

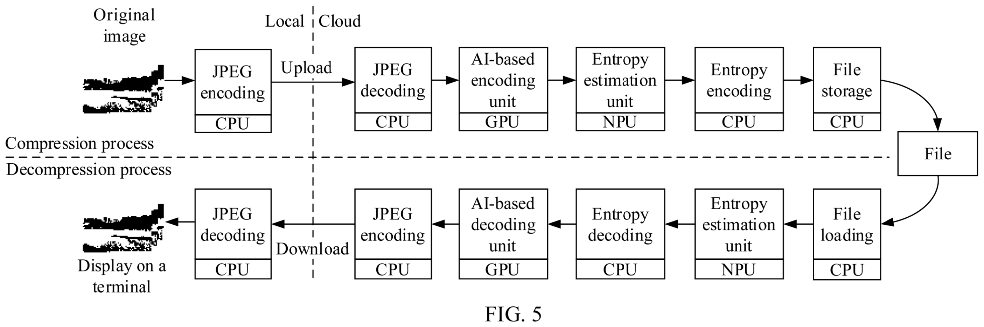

FIG. 5 is an example diagram of a Huawei Cloud application scenario. As shown in FIG. 5, the application scenario may be a terminal album, Cyberverse, a Huawei Cloud album, video surveillance, live streaming, or the like.

Encoder side: An original image is obtained locally, and image (JPEG) encoding is performed on the original image to obtain a compressed image. Then the compressed image is sent to a cloud. The cloud performs JPEG decoding on the compressed image to obtain an image. Then an AI-based encoding unit transforms the image into an image feature with lower redundancy. The AI-based encoding unit usually includes a nonlinear transformation unit and has a nonlinear characteristic. An entropy estimation unit is responsible for calculating an encoding probability of each piece of data in the image feature. An entropy encoding network performs lossless encoding on the image feature based on the probability corresponding to each piece of data, to obtain a bitstream/image file. This further reduces an amount of data transmitted during image compression. A storage module stores the bitstream/image file to a corresponding storage location on a terminal.

Decoder side: When a local side needs to obtain an image from a cloud, a cloud loading module loads a bitstream/image file from a corresponding storage location on a terminal, and inputs the bitstream/image file to an entropy decoding network. An entropy estimation unit is responsible for calculating a decoding probability of each piece of data in an image feature. An entropy decoding network performs lossless decoding on the bitstream/image file based on the probability corresponding to each piece of data, to obtain a reconstructed image feature. An AI-based decoding unit performs inverse transformation on the image feature output by entropy decoding, and parses the image feature into a reconstructed image. Corresponding to the AI-based encoding unit, the AI-based decoding unit usually includes a nonlinear transformation unit and has a nonlinear characteristic. Then the cloud performs JPEG encoding on the image to obtain a compressed image, and sends the compressed image to the local side. The local side performs JPEG decoding on the compressed image to obtain an image, and displays the image.

Optionally, the entropy estimation unit may be an NPU, a JPEG encoding module, a JPEG decoding module, the entropy encoding network, the entropy decoding network, the storage module, and the loading module may be CPUs, and the AI-based encoding unit and the AI-based decoding unit may be graphics processing units (Graphics Processing Unit, GPU).

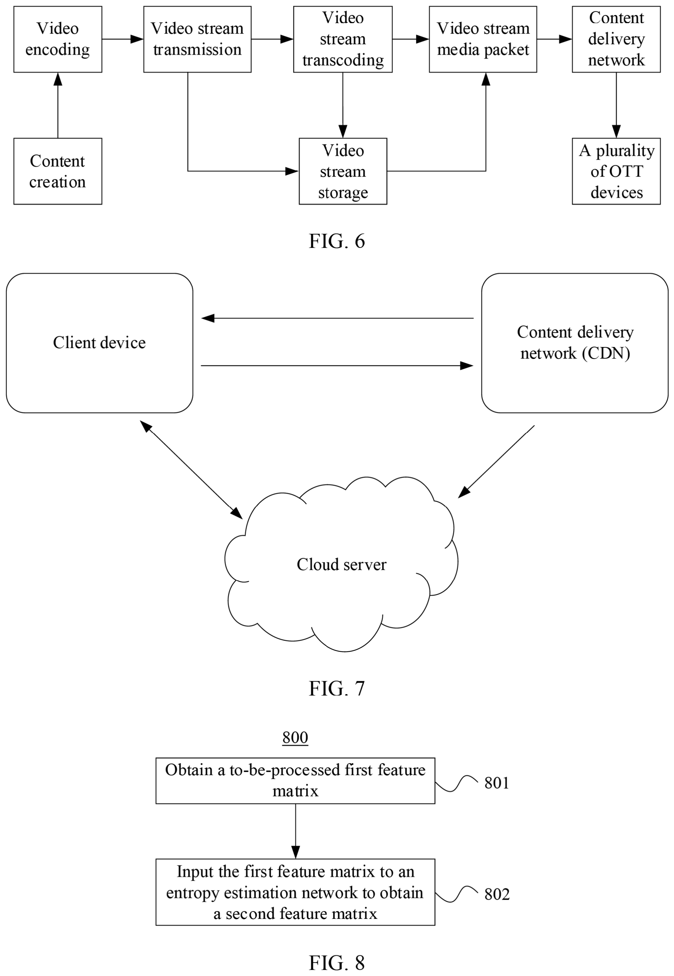

FIG. 6 is a diagram of an operating process of a streaming media system to which embodiments of this application are applicable. As shown in FIG. 6, the streaming media system includes a content creation module, which generates needed content data, for example, a video or audio. The streaming media system further includes a video encoding module, which encodes generated content through an encoder. The streaming media system further includes a video stream transmission module, which transmits an encoded video in a form of a bitstream. Optionally, a format of a video stream may be converted into a bitstream format of a transmission protocol commonly used for an open Internet video service (over the top TV, OTT) device. For example, the protocol includes but is not limited to the real-time streaming protocol (real-time streaming protocol, RTSP), the hypertext transfer protocol (hypertext transfer protocol, HTTP), the HTTP live streaming protocol (HTTP Live streaming protocol, HLS), MPEG dynamic adaptive streaming over HTTP (MPEG Dynamic Adaptive Streaming over HTTP, MPEG-DASH), the real-time transport protocol (Real-time Transport protocol, RTP), the real-time messaging protocol (Real-Time Messaging Protocol, RTMP), or any combination thereof. Optionally, video stream storage may be performed to store an original format of the video stream and/or a plurality of bitstream formats obtained through conversion, for ease of use. Further, the streaming media system further includes a video stream encapsulation module, configured to encapsulate the video stream to generate an encapsulated video stream. The encapsulated video stream may be referred to as a video streaming media packet. For example, the video streaming media packet may be generated based on a transcoded video stream or a stored video stream. Further, the streaming media system further includes a content delivery network (content delivery network, CDN), and the CDN is configured to deliver the video streaming media packet to a plurality of OTT devices, for example, a mobile phone, a computer, a tablet computer, and a home projector.

It should be noted that all of the video encoding, the video stream transmission, the video stream transcoding, the video stream storage, the video streaming media packet generation, and the content delivery network may be implemented on a cloud platform (or understood as a cloud server). In a possible implementation, the video encoding module may include an integration of the encoding network, the quantization, the entropy encoding network, and the entropy estimation network in FIG. 1; the video stream transcoding module may include an integration of the entropy estimation network, the entropy decoding network, and the decoding network in FIG. 1; and the OTT device may include display of the reconstructed image in FIG. 1.

FIG. 7 is a diagram of an architecture of a streaming media system according to an embodiment of this application. As shown in FIG. 7, the architecture of the streaming media system includes a client device, a content delivery network, and a cloud server.

A user on the client device sends a play or playback request to a cloud platform (namely, the cloud server). Optionally, content of the sent request may be a title of a to-be-played movie or TV program.

The cloud platform performs decision-making, replies to the client, and sends an address, on the CDN, of content requested by the client to the client. Optionally, content sent to the client may be a URL (uniform resource locator) link. Specifically, a playback application service on the cloud platform checks user authorization and permission, and then determines, based on features of clients and a current network condition, specific files that are needed for processing the playback request. It should be noted that the CDN periodically reports a running status, a learned route, and available content (file) to a cache control service on the cloud platform.

Then the client requests to-be-played content from the CDN based on the address. The CDN provides the content for the client, to finally complete the request of the client.

Based on the foregoing application scenario, embodiments of this application provide an entropy estimation method for image compression, to improve compression performance.

FIG. 8 is a flowchart of a process 800 of an entropy estimation method for image compression according to an embodiment of this application. The process 800 may be performed on the encoder side or the decoder side in the foregoing embodiments. The process 800 is described as a series of steps or operations. It should be understood that the process 800 may be performed in various sequences and/or simultaneously, and is not limited to an execution sequence shown in FIG. 8. The process 800 includes the following steps.

Step 801: Obtain a to-be-processed first feature matrix.

According to the foregoing descriptions, an entropy estimation network may obtain an estimated probability value of each feature element through estimation based on an image feature, and the probability value is used for processing by an entropy encoding network and an entropy decoding network. In view of this, the first feature matrix may be a feature matrix obtained by processing an original image through an encoding network and then quantizing a processed image. For example, the first feature matrix may be expressed as $input[C_{in}, h_{in}, w_{in}]$, where $C_{in}$ indicates a quantity of channels of the first feature matrix, $h_{in}$ indicates a height of the first feature matrix, and $w_{in}$ indicates a width of the first feature matrix, that is, $[C_{in}, h_{in}, w_{in}]$ indicates a shape (shape) of the first feature matrix.

Step 802: Input the first feature matrix to the entropy estimation network to obtain a second feature matrix.

The second feature matrix may be expressed as $output[C_{out}, h_{out}, w_{out}]$, where $C_{out}$ indicates a quantity of channels of the second feature matrix, $h_{out}$ indicates a height of the second feature matrix, and $w_{out}$ indicates a width of the second feature matrix, that is, $[C_{out}, h_{out}, w_{out}]$ indicates a shape (shape) of the second feature matrix.

In this embodiment of this application, the second feature matrix and the first feature matrix meet the following conditions:

$$C_{out} = C_{in}$$

$$h_{out} = s \cdot h_{in}$$

$$w_{out} = s \cdot w_{in}$$

s is an integer greater than 1, and indicates a stride (stride) of a sliding window. Optionally, s=4.

The entropy estimation network sequentially includes a third convolutional layer, a first activation function, a first convolutional layer, a pointwise operation, a second activation function, and s× upsampling processing. The first convolutional layer includes two types of convolution processing, and an input of the pointwise operation is respective outputs of the two types of convolution processing.

An input feature matrix of any one of the foregoing convolutional layers obtains, through a convolution operation, an output feature matrix with an unchanged height and width, and the output feature matrix may be considered as a local response of the input feature matrix. The convolution operation may be expressed as the following formula:

$$Conv(x) = \sum w * x + b$$

w is a weight of the convolutional layer, b is a bias parameter of the convolutional layer, and both w and b are learnable parameters that are not limited.

Any one of the foregoing activation operations is a pointwise operation. To be specific, an independent mapping operation is performed on each element of the input feature matrix. The activation operation may be an identity operation (Identity), a rectified linear unit (Rectified Linear Unit, ReLU), a leaky rectified linear unit (LeakyReLU), a parametric rectified linear unit (Parametric Rectified Linear Unit, PReLU), Sigmoid, Tanh, or the like, and may provide a linear or nonlinear transformation characteristic. In this embodiment of this application, the first activation function and the second activation function may be a same operation or different operations. This is not specifically limited.

The Identity indicates to obtain an original value of an input feature value. This may be expressed by using the following formula:

$$y = x$$

The ReLU is a piecewise linear mapping method. For an input feature value, an output for a feature value less than 0 is 0, and an output for a feature value greater than or equal to 0 is equal to the feature value. This may be expressed by using the following formula:

$$y = \mathrm{Relu}(x) = \begin{cases} x, x \geq 0 \\ 0, x < 0 \end{cases}$$

The LeakyReLU is a piecewise linear mapping method. Based on the ReLU, an input feature value less than 0 is scaled by using a preset weight, and the weight is usually 0.01. This may be expressed by using the following formula:

$$y = \mathrm{LeakyReLU}(x) = \begin{cases} x, x \geq 0 \\ ax, x < 0 \end{cases}$$

a indicates a preset value, and is usually set to 0.01.

A definition of the PReLU is similar to that of the LeakyReLU.

$$y = \mathrm{PReLU}(x) = \begin{cases} x, x \geq 0 \\ ax, x < 0 \end{cases}$$

A difference from the LeakyReLU lies in that a is a trainable parameter and may be obtained through training.

The Sigmoid may be expressed as the following operation:

$$y = \mathrm{Sigmoid}(x) = \frac{1}{1 + e^{-x}}$$

The Tanh may be expressed as the following operation:

$$y = \tanh(x) = \frac{e^x - e^{-x}}{e^x + e^{-x}}$$

It should be noted that the activation function may alternatively be another variant of the ReLU. This is not specifically limited in this embodiment of this application.

The pointwise operation may include pointwise multiplication, pointwise addition, pointwise subtraction, or pointwise division. The input of the pointwise operation is respective output feature matrices of the two types of convolution processing at the first convolutional layer. Sizes of the two output feature matrices are the same, and the pointwise operation performs multiplication, addition, subtraction, or division between element values at corresponding locations. The convolution operation is combined with the pointwise operation to implement the local attention mechanism, and the response at each location in the input feature matrix is modulated by using the local information of the feature matrix.

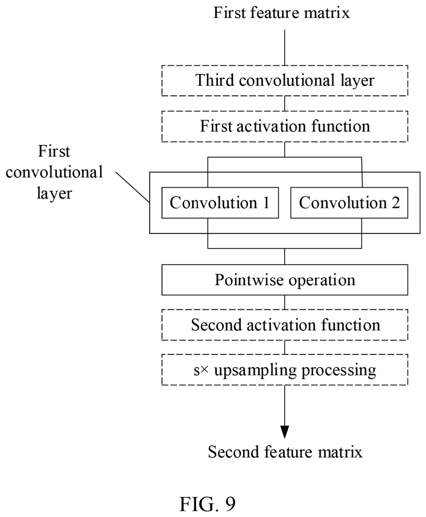

FIG. 9 is a diagram of a structure of an entropy estimation network according to an embodiment of this application. As shown in FIG. 9, an input of the entropy estimation network is a first feature matrix.

The first feature matrix is input to a third convolutional layer, and an output of the third convolutional layer is a third feature matrix. The third feature matrix and the first feature matrix have a same height and a same width (this may also be referred to as having a same size), but have different quantities of channels.

The third feature matrix is input to a first activation function, and a fourth feature matrix is output. The fourth feature matrix and the third feature matrix have a same size and a same quantity of channels.

The fourth feature matrix is input to two types of convolution (convolution 1 and convolution 2) at a first convolutional layer, and a fifth feature matrix and a sixth feature matrix are respectively output. The fifth feature matrix and the sixth feature matrix have a same size and a same quantity of channels. The fifth/sixth feature matrix and the fourth feature matrix have a same size but different quantities of channels.

The fifth feature matrix and the sixth feature matrix are input to a pointwise operation, and a seventh feature matrix is output. The seventh feature matrix and the fifth/sixth feature matrix have a same size and a same quantity of channels.

The seventh feature matrix is input to a second activation function, and an eighth feature matrix is output. The eighth feature matrix and the seventh feature matrix have a same size and a same quantity of channels.

$s\times$ upsampling processing is performed on the eighth feature matrix to output a second feature matrix. A height of the second feature matrix is s times of a height of the eighth feature matrix. A width of the second feature matrix is s times of a width of the eighth feature matrix. A quantity of channels of the second feature matrix is the same as a quantity of channels of the first feature matrix.

For example, the entropy estimation network in this embodiment of this application may be a hyper scale decoder (Hyper Scale Decoder, HSD). All operations in the HSD are integers, accumulators in all calculation processes are 32-bit integers, and model parameters are quantized into 8-bit integers. This ensures cross-platform bit consistency of the neural network module. The HSD uses custom quantized convolution. For each type of quantized convolution in the process, a group of clipping values $\{d_k\}$ and scale and shift parameters $\{p_k\}$ are specified, where $1 \leq k \leq 4$. All clipping values in the quantized convolution are as follows: $d_k = 2^{15} - 1$. The scale and shift parameter $\{p_k\}$ is obtained through training.

It should be noted that a value of a weight in a quantization model does not exceed $2^{15} - 1$, and a combination of a shift and a clipping value ensures that a register of the quantized convolution is within 32 bits.

A structure of the HSD is described as follows: First, the HSD receives an input three-dimensional matrix with a size of [C, H, W], and converts the matrix into a matrix of [C1, H, W] through $1\times1$ quantized convolution and an activation function. The matrix is converted into two output matrices A and B of [C2, H, W] through $1\times1$ quantized convolution and $3\times3$ quantized group convolution. Then the matrices A and B are converted into a matrix C of [C2, H, W] through a pointwise operation. Then the matrix C is converted into a matrix of [16C, H, W] through an activation function and $1\times1$ quantized convolution. Then a final output with a size of [C, 4H, 4W] is formed through a PixelShuffle operation.

In this embodiment of this application, the $s\times$ upsampling processing may be implemented in a plurality of manners.

(1) The $s\times$ upsampling processing sequentially includes a second convolutional layer and an $s\times$ pixel shuffle layer.

The eighth feature matrix is input to the second convolutional layer, and a ninth feature matrix is output. Sizes of the ninth feature matrix and the eighth feature matrix are the same, but a quantity of channels of the ninth feature matrix is n times of the quantity of channels of the first feature matrix. The ninth feature matrix is input to the pixel shuffle layer, and the second feature matrix is output. The height of the second feature matrix is s times of a height of the ninth feature matrix. The width of the second feature matrix is s times of a width of the ninth feature matrix. The quantity of channels of the second feature matrix is 1/n of the quantity of channels of the ninth feature matrix, and is the same as the quantity of channels of the first feature matrix. Optionally, $n=s^2$.

The pixel shuffle layer, also referred to as a subpixel convolution layer, is expressed as PixelShuffle(s), where s>1. The pixel shuffle layer may rearrange elements in an input feature matrix (in a shape of $[C_4, h_4, w_4]$) to obtain an output feature matrix (in a shape of $[C_{out}, h_{out}, w_{out}]$), where $h_{out} = s \cdot h_4$, $w_{out} = s \cdot w_4$, and $C_{out} = C_4/s^2$.

The pixel shuffle layer may be expressed as follows:

$$output[c, i, j] = input[s^2 c + s i' + j', i/s + i', j/s + j']$$

c ranges from 0 to $C_{out}$ - 1, i ranges from 0 to $h_{out}$ - 1, j ranges from 0 to $w_{out}$ - 1, i' ranges from 0 to s-1, and j' ranges from 0 to s-1.

At a last layer of the entropy estimation network, upsampling is performed by using the pixel shuffle layer, and only a memory operation may need to be performed. Therefore, adaptability to different hardware is high (for example, the memory operation may be converted into a convolution operation on an AI accelerator as needed), and the memory operation may even be performed in combination with a subsequent step to combine memory access, to improve overall encoding/decoding efficiency.

(2) The s× upsampling processing sequentially includes a second convolutional layer and a deconvolutional layer for s× upsampling.

The eighth feature matrix is input to the second convolutional layer, and a ninth feature matrix is output. Sizes of the ninth feature matrix and the eighth feature matrix are the same, but a quantity of channels of the ninth feature matrix is n times of the quantity of channels of the first feature matrix. The ninth feature matrix is input to the deconvolutional layer for s× upsampling, and the second feature matrix is output. The height of the second feature matrix is s times of a height of the ninth feature matrix. The width of the second feature matrix is s times of a width of the ninth feature matrix. The quantity of channels of the second feature matrix is 1/n of the quantity of channels of the ninth feature matrix, and is the same as the quantity of channels of the first feature matrix. Optionally, $n=s^2$.

(3) The s× upsampling processing includes a deconvolutional layer for s× upsampling.

The eighth feature matrix is input to the deconvolutional layer for s× upsampling, and the second feature matrix is output. The height of the second feature matrix is s times of the height of the eighth feature matrix. The width of the second feature matrix is s times of the width of the eighth feature matrix. The quantity of channels of the second feature matrix is 1/n of a quantity of channels of the eighth feature matrix, and is the same as the quantity of channels of the first feature matrix. Optionally, $n=s^2$.

(4) The s× upsampling processing includes a second convolutional layer and two (s/2)× pixel shuffle layers.

The eighth feature matrix is input to the second convolutional layer, and a ninth feature matrix is output. Sizes of the ninth feature matrix and the eighth feature matrix are the same, but a quantity of channels of the ninth feature matrix is n times of the quantity of channels of the first feature matrix. The ninth feature matrix is input to a $1^{st}$ (s/2)× pixel shuffle layer, and a tenth feature matrix is output. A height of the tenth feature matrix is s/2 times of a height of the ninth feature matrix. A width of the tenth feature matrix is s/2 times of a width of the ninth feature matrix. A quantity of channels of the tenth feature matrix is n/2 of the quantity of channels of the ninth feature matrix. The tenth feature matrix is input to a $2^{nd}$ (s/2)× pixel shuffle layer, and an eleventh feature matrix is output. A height of the eleventh feature matrix is s/2 times of the height of the tenth feature matrix. A width of the eleventh feature matrix is s/2 times of the width of the tenth feature matrix. A quantity of channels of the eleventh feature matrix is n/2 of the quantity of channels of the tenth feature matrix, and is the same as the quantity of channels of the first feature matrix. Optionally, $n=s^2$.

It should be noted that, in addition to the foregoing several implementations, the s× upsampling processing may alternatively be implemented in another manner. Provided that the height of the second feature matrix is s times of the height of the eighth feature matrix, the width of the second feature matrix is s times of the width of the eighth feature matrix, and the quantity of channels of the second feature matrix is the same as the quantity of channels of the first feature matrix, any implementation may be used as an implementation of the s× upsampling processing. This is not specifically limited in this embodiment of this application.

In a possible implementation, one of two types of convolution at the first convolutional layer may be a two-dimensional group convolutional layer (also referred to as a group convolutional layer). Group convolution is expressed as $CONV(K_{ver} * K_{hor}, C_1, C_2, G, t\downarrow)$. A size of an input feature matrix of the convolutional layer is $[C_1, h_1, w_1]$, and a size of an output feature matrix of the convolutional layer is $[C_2, h_2, w_2]$, where $h_1 = t \cdot h_2$, and $w_1 = t \cdot w_2$. G indicates a quantity of groups, and controls a connection between the input feature matrix and the output feature matrix. $C_1$ and $C_2$ are exactly divisible by G, and t indicates a stride of a sliding window. No spatial resolution change is "executed" without a stride parameter.

The group convolution may be expressed as follows:

$$out[c_2, i, j] = bias[c_2] + \sum_{c'=0}^{\frac{C_1}{G}} weight[c_2, c'] \star input\left[\frac{C_1}{G} * \frac{C_2}{G} + c', t \cdot i, t \cdot j\right],$$

where

$$0 \leq i < h_2, \text{ and } 0 \leq j < w_2;$$

* is a 2D cross-correlation operator with a kernel size of $K_{ver} * K_{hor}$; and

$$b \star a[i,j] = \sum_{j'=-K_{hor}}^{j'=K_{hor}} \sum_{i'=-K_{ver}}^{i'=K_{ver}} b[i',j'] \star a[i+i',j+j']$$

The feature matrix *weight*[$C_1/G$, $C_2$, $K_{ver}$, $K_{hor}$] includes a learnable weight, and the feature matrix *bias*[$C_2$] includes a learnable bias parameter. Both the weight and the bias parameter are learnable parameters that are not limited.

Comparison between the convolution and the group convolution is as follows:

The convolution may be expressed as

$$out[c_2,i,j] = bias[c_2] + \sum_{c=0}^{C_1} weight[c_2,c] \star input[C_1,t \cdot i,t \cdot j]$$ , and the group convolution may be expressed as $out[c_2,i,j] = bias[c_2] + \sum_{c'=0}^{\frac{C_1}{G}} weight[c_2,c'] \star input\left[\frac{C_1}{G} * \frac{C_2}{G} + c',t \cdot i,t \cdot j\right]$ . It

can be learned that, in the entropy estimation network, the group convolution may be used to expand a receptive field while reducing an amount of calculation.

In this embodiment of this application, in the entropy estimation network, the convolution operation is combined with the pointwise operation to implement a local attention mechanism, and a response at each location in an input feature matrix is modulated by using local information of the feature matrix to improve compression performance. In addition, the group convolution may be used to expand the receptive field while reducing the amount of calculation.

In this embodiment of this application, the entropy estimation network may include a variance prediction network and a mean prediction network. Input feature matrices (namely, first feature matrices) of the two networks may be the same, and output feature matrices of the two networks are different. An output feature matrix of the variance prediction network may be referred to as a variance matrix, and an output feature matrix of the mean prediction network may be referred to as a mean matrix. Structures of the two networks are similar. A difference is as follows: Because a variance is a positive number but a mean is not limited thereto, any convolutional layer in the variance prediction network is a quantized convolutional layer, and an absolute value operation is set inside or outside the convolutional layer, to ensure a positive-number characteristic of the variance. In addition, all operations at the quantized convolutional layer are integers, accumulators in all calculation processes are integers, and model parameters are quantized into integers. This ensures cross-platform bit consistency of the network module.

Quantized convolution may be expressed as *qCONV*($K_{ver}$ * $K_{hor}$, $C_5$, $C_6$, $G$, $q \downarrow$, $d$, $p$). During convolution, a feature matrix in a shape of [$C_5$, $h_5$, $w_5$] is received, and a feature matrix in a shape of [$C_6$, $h_6$, $w_6$] is output, where $h_6 = q \cdot h_5$, and $w_6 = q \cdot w_5$. q indicates a convolution stride, a default value of the stride is 1, and a corresponding output has a same spatial resolution. d is a non-negative integer, and defines a maximum value of an element of a clipped input feature matrix. $p[c_7]$ includes a scale factor and a translation factor of each channel of the output feature matrix.

Operations in the quantized convolution may be described as three steps of operations:

$$temp[c_5,i,j] = clip(-d,d-1,input[c_5,i,j]),$$

where

$$i = 0,\dots,h_5-1; j = 0,\dots,w_5-1; c_5 = 0,\dots,C_5-1;$$

$$R[c_6,i,j] = bias[c_6] + \sum_{c_5=0}^{C_5-1} weight[c_5,c_6] \star temp[c_{in},q \cdot i,q \cdot j],$$

where
"*" is a two-dimensional cross-correlation operator (convolution operation) with a kernel size of $K_{ver}$ * $K_{hor}$; and

$$out[c_6,i,j] = (R[c_6,i,j]) \gg p[c_6],$$

where

$$i = 0,\dots,h_6-1; j = 0,\dots,w_6-1; c_6 = 0,\dots,C_6-1.$$

A feature matrix in a shape of [$c_5$, $c_6$, $K_{ver}$, $K_{hor}$] is a learnable integer weight, and a feature matrix in a shape of [$c_6$] is a learnable integer bias.

Optionally, an input of the entropy estimation network is the first feature matrix. First, 1×1 convolution (the first convolutional layer, at which a size of a convolution kernel is 1×1) is performed. Then an activation function a (the first activation function, for example, the ReLU or the LeakyReLU) is performed. Then two types of convolution are performed: (the second convolutional layer): $1\times1$ convolution and $3\times3$ group convolution (group convolution). Then a pointwise operation is performed on respective outputs of the two types of convolution. Then an activation function b (the second activation function, for example, the ReLU or the LeakyReLU) is performed. Then a quantity of channels is upscaled to 16 times of the quantity of channels of the first feature matrix through $1\times1$ convolution. Finally, the quantity of channels is downscaled by 16 times through PixelShuffle(4) with $4\times$ sampling, and a height and a width separately undergo $4\times$ sampling, to obtain a final output, namely, the second feature matrix.

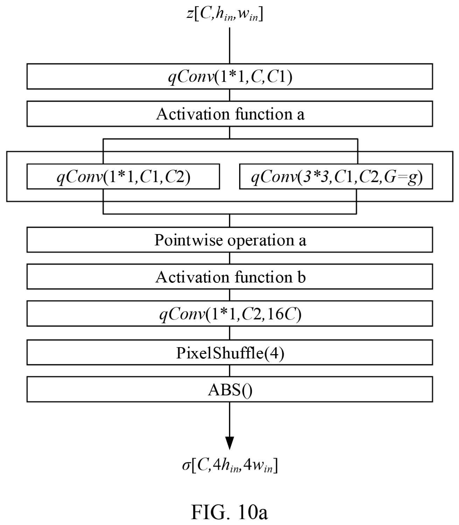

FIG. 10a is a diagram of a structure of a variance prediction network for entropy estimation. As shown in FIG. 10a, a first feature matrix $z[C, h_{in}, w_{in}]$ is input to $qConv(1 * 1, C, C1)$ ($1\times1$ convolution, where C indicates a quantity of input channels, and C1 indicates a quantity of output channels). Then an activation function a is performed. Then two types of convolution are performed: $gConv(1 * 1, C1, C2)$ ($1\times1$ convolution, where C1 indicates a quantity of input channels, and C2 indicates a quantity of output channels) and $qConv(3 * 3, C1, C2, G = g)$ ($3\times3$ group convolution, where C1 indicates a quantity of input channels, and C2 indicates a quantity of output channels). Then a pointwise operation a is performed on respective outputs of the two types of convolution. Then an activation function b is performed. Then a quantity of channels is upscaled to 16 times of a quantity of channels of the first feature matrix through $qConv(1 * 1, C2, 16C)$ ($1\times1$ convolution, where C2 indicates a quantity of input channels, and 16C indicates a quantity of output channels). Finally, the quantity of channels is downscaled by 16 times through PixelShuffle(4), and a height and a width separately undergo $4\times$ upsampling. Then an absolute value operation ABS() is sequentially performed to obtain a second feature matrix, namely, a variance matrix $\delta[C, 4h_{in}, 4w_{in}]$.

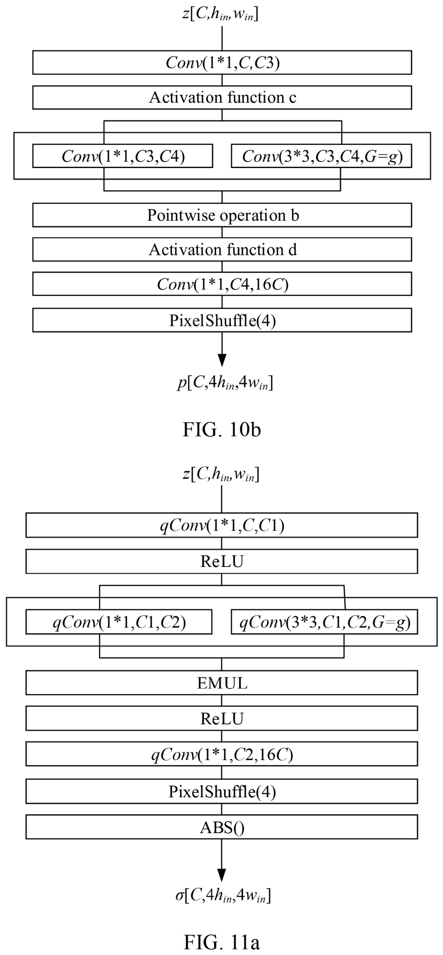

FIG. 10b is a diagram of a structure of a mean prediction network for entropy estimation. As shown in FIG. 10b, a first feature matrix $z[C, h_{in}, w_{in}]$ is input to $Conv(1 * 1, C, C3)$ ($1\times1$ convolution, where C indicates a quantity of input channels, and C3 indicates a quantity of output channels). Then an activation function c is performed. Then two types of convolution are performed: $Conv(1 * 1, C3, C4)$ ($1\times1$ convolution, where C3 indicates a quantity of input channels, and C4 indicates a quantity of output channels) and $Conv(3 * 3, C3, C4, G = g)$ ($3\times3$ group convolution, where C3 indicates a quantity of input channels, and C4 indicates a quantity of output channels). Then a pointwise operation b is performed on respective outputs of the two types of convolution. Then an activation function d is performed. Then a quantity of channels is upscaled to 16 times of a quantity of channels of the first feature matrix through $Conv(1 * 1, C4, 16C)$ ($1\times1$ convolution, where C4 indicates a quantity of input channels, and 16C indicates a quantity of output channels). Finally, the quantity of channels is downscaled by 16 times through PixelShuffle(4), and a height and a width separately undergo $4\times$ upsampling to obtain a second feature matrix, namely, a mean matrix $p[C, 4h_{in}, 4w_{in}]$.

Optionally, there may be a plurality of choices for the activation function, the quantity of channels, and the like in the embodiments shown in FIG. 10a and FIG. 10b. For example, the activation function a to the activation function d may be specified as any activation functions, including but not limited to a ReLU, a LeakyReLU, Tanh, and the like. For another example, the intermediate quantities C1, C2, C3, and C4 of channels in the entropy estimation network may alternatively be adjusted in any manner. In addition, $4\times$ upsampling processing at a last layer may alternatively be replaced with another operation depending on different inference speeds on hardware. Therefore, the foregoing several operations are not specifically limited in embodiments of this application.

The following describes the technical solutions of this application by using several specific embodiments.

Embodiment 1

FIG. 11a is a diagram of a structure of a variance prediction network for entropy estimation. As shown in FIG. 11a, based on the embodiment shown in FIG. 10a, the activation function a and the activation function b are ReLUs, and the pointwise operation a is element-wise multiplication (Element-Wise Multiplication, EMUL).

To be specific, a first feature matrix $z[C, h_{in}, w_{in}]$ is input to $qConv(1 * 1, C, C1)$ ($1\times1$ convolution, where C indicates a quantity of input channels, and C1 indicates a quantity of output channels). Then a ReLU is performed. Then two types of convolution are performed: $qConv(1 * 1, C1, C2)$ ($1\times1$ convolution, where C1 indicates a quantity of input channels, and C2 indicates a quantity of output channels) and $qConv(3 * 3, C1, C2, G = g)$ ($3\times3$ group convolution, where C1 indicates a quantity of input channels, and C2 indicates a quantity of output channels). Then EMUL is performed on respective outputs of the two types of convolution. Then a ReLU is performed. Then a quantity of channels is upscaled to 16 times of a quantity of channels of the first feature matrix through $qConv(1 * 1, C2, 16C)$ ($1\times1$ convolution, where C2 indicates a quantity of input channels, and 16C indicates a quantity of output channels). Finally, the quantity of channels is downscaled by 16 times through PixelShuffle(4), and a height and a width separately undergo $4\times$ upsampling. Then an absolute value operation ABS() is sequentially performed to obtain a second feature matrix, namely, a variance matrix $\delta[C, 4h_{in}, 4w_{in}]$.

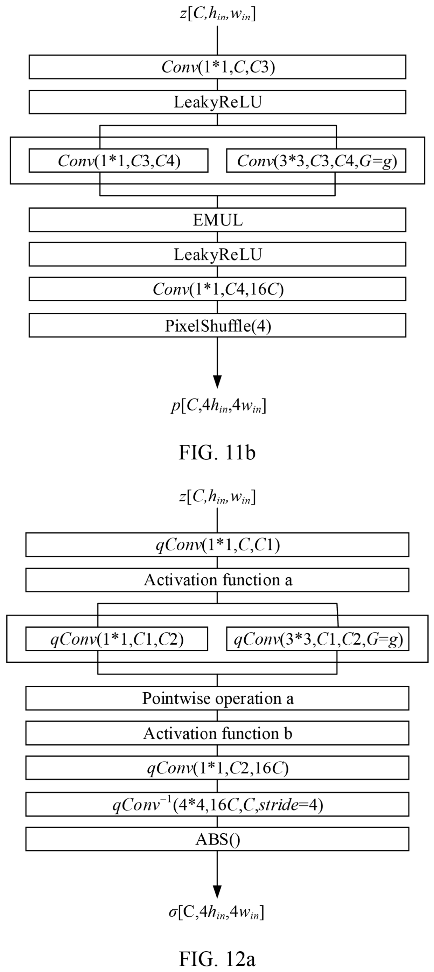

FIG. 11b is a diagram of a structure of a mean prediction network for entropy estimation. As shown in FIG. 11b, based on the embodiment shown in FIG. 10b, the activation function c and the activation function d are LeakyReLUs, and the point-wise operation b is EMUL.

To be specific, a first feature matrix $z[C, h_{in}, w_{in}]$ is input to $Conv(1 * 1, C, C3)$ ($1 \times 1$ convolution, where C indicates a quantity of input channels, and C3 indicates a quantity of output channels). Then a LeakyReLU is performed. Then two types of convolution are performed: $Conv(1 * 1, C3, C4)$ ($1 \times 1$ convolution, where C3 indicates a quantity of input channels, and C4 indicates a quantity of output channels) and $Conv(3 * 3, C3, C4, G = g)$ ($3 \times 3$ group convolution, where C3 indicates a quantity of input channels, and C4 indicates a quantity of output channels). Then EMUL is performed on respective outputs of the two types of convolution. Then a LeakyReLU is performed. Then a quantity of channels is upscaled to 16 times of a quantity of channels of the first feature matrix through $Conv(1 * 1, C4, 16C)$ ($1 \times 1$ convolution, where C4 indicates a quantity of input channels, and 16C indicates a quantity of output channels). Finally, the quantity of channels is downscaled by 16 times through PixelShuffle(4), and a height and a width separately undergo $4 \times$ upsampling to obtain a second feature matrix, namely, a mean matrix $p[C, 4h_{in}, 4w_{in}]$.

In this embodiment, a multiplication operation is used. In comparison with a division operation, the following two limitations are unnecessary: A variance needs to be a positive number when a square root of the variance is to be calculated; and a denominator in division cannot be 0.

Embodiment 2

FIG. 12a is a diagram of a structure of a variance prediction network for entropy estimation. As shown in FIG. 12a, based on the embodiment shown in FIG. 10a, the PixelShuffle(4) for $4 \times$ upsampling processing is replaced with a deconvolutional layer for $4 \times$ upsampling.

To be specific, a first feature matrix $z[C, h_{in}, w_{in}]$ is input to $qConv(1 * 1, C, C1)$ ($1 \times 1$ convolution, where C indicates a quantity of input channels, and C1 indicates a quantity of output channels). Then an activation function a is performed. Then two types of convolution are performed: $qConv(1 * 1, C1, C2)$ ($1 \times 1$ convolution, where C1 indicates a quantity of input channels, and C2 indicates a quantity of output channels) and $qConv(3 * 3, C1, C2, G = g)$ ($3 \times 3$ group convolution, where C1 indicates a quantity of input channels, and C2 indicates a quantity of output channels). Then a pointwise operation a is performed on respective outputs of the two types of convolution. Then an activation function b is performed. Then a quantity of channels is upscaled to 16 times of a quantity of channels of the first feature matrix through $qConv(1 * 1, C2, 16C)$ ($1 \times 1$ convolution, where C2 indicates a quantity of input channels, and 16C indicates a quantity of output channels). Finally, the quantity of channels is downscaled by 16 times through $qConv^{-1}(4 * 4, 16C, C, stride = 4)$, and a height and a width separately undergo $4 \times$ upsampling. Then an absolute value operation ABS() is sequentially performed to obtain a second feature matrix, namely, a variance matrix $\delta[C, 4h_{in}, 4w_{in}]$.

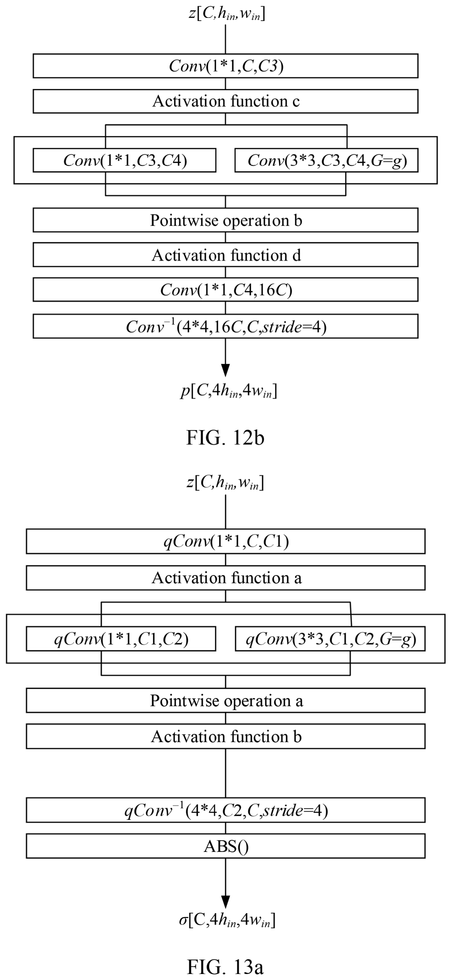

FIG. 12b is a diagram of a structure of a mean prediction network for entropy estimation. As shown in FIG. 12b, based on the embodiment shown in FIG. 10b, the PixelShuffle(4) for $4 \times$ upsampling processing is replaced with a deconvolutional layer for $4 \times$ upsampling.

To be specific, a first feature matrix $z[C, h_{in}, w_{in}]$ is input to $Conv(1 * 1, C, C3)$ ($1 \times 1$ convolution, where C indicates a quantity of input channels, and C3 indicates a quantity of output channels). Then an activation function c is performed. Then two types of convolution are performed: $Conv(1 * 1, C3, C4)$ ($1 \times 1$ convolution, where C3 indicates a quantity of input channels, and C4 indicates a quantity of output channels) and $Conv(3 * 3, C3, C4, G = g)$ ($3 \times 3$ group convolution, where C3 indicates a quantity of input channels, and C4 indicates a quantity of output channels). Then a pointwise operation b is performed on respective outputs of the two types of convolution. Then an activation function d is performed. Then a quantity of channels is upscaled to 16 times of a quantity of channels of the first feature matrix through $Conv(1 * 1, C4, 16C)$ ($1 \times 1$ convolution, where C4 indicates a quantity of input channels, and 16C indicates a quantity of output channels). Finally, the quantity of channels is downscaled by 16 times through $Conv^{-1}(4 * 4, 16C, C, stride = 4)$, and a height and a width separately undergo $4 \times$ upsampling to obtain a second feature matrix, namely, a mean matrix $p[C, 4h_{in}, 4w_{in}]$.

In this embodiment, the deconvolutional layer for $4 \times$ upsampling is placed at the end. This can meet an upsampling requirement, and can also avoid an increase in an amount of calculation because no subsequent processing is to be performed.

Embodiment 3

FIG. 13a is a diagram of a structure of a variance prediction network for entropy estimation. As shown in FIG. 13a, based on the embodiment shown in FIG. 10a, the last convolutional layer and the PixelShuffle(4) for $4 \times$ upsampling processing are replaced with a deconvolutional layer for $4 \times$ upsampling.

To be specific, a first feature matrix $z[C, h_{in}, w_{in}]$ is input to $qConv(1 * 1, C, C1)$ ($1 \times 1$ convolution, where C indicates a quantity of input channels, and C1 indicates a quantity of output channels). Then an activation function a is performed. Then two types of convolution are performed: $qConv(1 * 1, C1, C2)$ ($1 \times 1$ convolution, where C1 indicates a quantity of input channels, and C2 indicates a quantity of output channels) and $qConv(3 * 3, C1, C2, G = g)$ ($3 \times 3$ group convolution, where C1 indicates a quantity of input channels, and C2 indicates a quantity of output channels). Then a pointwise operation a is performed on respective outputs of the two types of convolution. Then an activation function b is performed. Finally, a quantity of channels is scaled to a quantity of channels of the first feature matrix through $qConv^{-1}(4 * 4, C2, C, stride = 4)$, and a height and a width separately undergo $4\times$ upsampling. Then an absolute value operation ABS() is sequentially performed to obtain a second feature matrix, namely, a variance matrix $\delta[C, 4h_{in}, 4w_{in}]$.

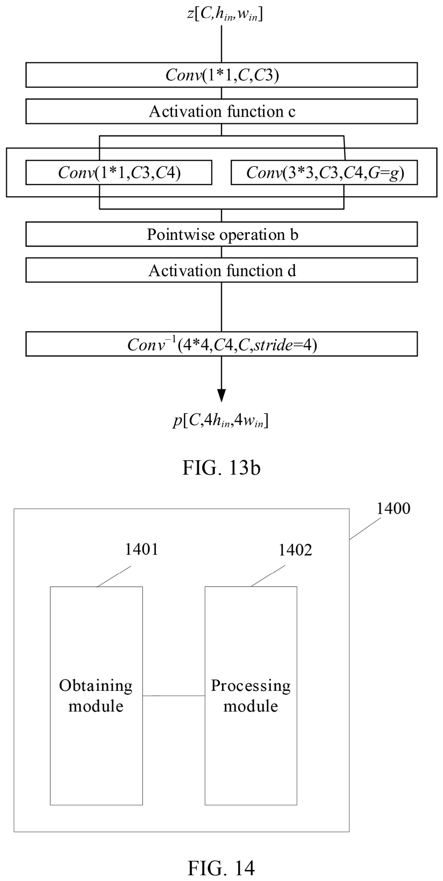

FIG. 13b is a diagram of a structure of a mean prediction network for entropy estimation. As shown in FIG. 13b, based on the embodiment shown in FIG. 10b, the last convolutional layer and the PixelShuffle(4) for $4\times$ upsampling processing are replaced with a deconvolutional layer for $4\times$ upsampling.

To be specific, a first feature matrix $z[C, h_{in}, w_{in}]$ is input to $Conv(1 * 1, C, C3)$ ($1\times1$ convolution, where C indicates a quantity of input channels, and C3 indicates a quantity of output channels). Then an activation function c is performed. Then two types of convolution are performed: $Conv(1 = 1, C3, C4)$ ($1\times1$ convolution, where C3 indicates a quantity of input channels, and C4 indicates a quantity of output channels) and $Conv(3 * 3, C3, C4, G = g)$ ($3\times3$ group convolution, where C3 indicates a quantity of input channels, and C4 indicates a quantity of output channels). Then a pointwise operation b is performed on respective outputs of the two types of convolution. Then an activation function d is performed. Finally, a quantity of channels is scaled to a quantity of channels of the first feature matrix through $Conv^{-1}(4 * 4, C4, C, stride = 4)$, and a height and a width separately undergo $4\times$ upsampling to obtain a second feature matrix, namely, a mean matrix $p[C, 4h_{in}, 4w_{in}]$.

FIG. 14 is a diagram of an entropy estimation apparatus 1400 for image compression according to an embodiment of this application. As shown in FIG. 14, the apparatus 1400 in this embodiment may be used on an encoder side or a decoder side. The apparatus 1400 may include an obtaining module 1401 and a processing module 1402.

The obtaining module 1401 is configured to obtain a to-be-processed first feature matrix, where a shape of the first feature matrix is $[C_{in}, h_{in}, w_{in}]$, $C_{in}$ indicates a quantity of channels of the first feature matrix, $h_{in}$ indicates a height of the first feature matrix, and $w_{in}$ indicates a width of the first feature matrix. The processing module 1402 is configured to input the first feature matrix to an entropy estimation network to obtain a second feature matrix, where a shape of the second feature matrix is $[C_{out}, h_{out}, w_{out}]$, $C_{out}$ indicates a quantity of channels of the second feature matrix, $h_{out}$ indicates a height of the second feature matrix, and $w_{out}$ indicates a width of the second feature matrix. The second feature matrix and the first feature matrix meet the following conditions: $C_{out} = C_{in}$, $h_{out} = s \cdot h_{in}$, and $w_{out} = s \cdot w_{in}$, where s is an integer greater than 1. The entropy estimation network includes a first convolutional layer and a pointwise operation. The first convolutional layer includes two types of convolution processing. One of the two types of convolution processing is two-dimensional group convolution. An input of the pointwise operation is respective outputs of the two types of convolution processing.

In a possible implementation, an input feature matrix and an output feature matrix of the two-dimensional group convolution meet the following conditions: $h_1 = t \cdot h_2$, $w_1 = t \cdot w_2$, and $C_1$ and $C_2$ are exactly divisible by G, where t is an integer greater than 1, $C_1$ indicates a quantity of channels of the input feature matrix, $h_1$ indicates a height of the input feature matrix, $w_1$ indicates a width of the input feature matrix, $C_2$ indicates a quantity of channels of the output feature matrix, $h_2$ indicates a height of the output feature matrix, $w_2$ indicates a width of the output feature matrix, and G indicates a quantity of groups, and is used to control a connection between the input feature matrix and the output feature matrix.

In a possible implementation, the entropy estimation network further includes $s\times$ upsampling processing.

In a possible implementation, the $s\times$ upsampling processing sequentially includes a second convolutional layer and a pixel shuffle layer. A third feature matrix output by the second convolutional layer and the first feature matrix meet the following conditions: $C_3 = nC_{in}$, $h_3 = h_{in}$, and $w_3 = w_{in}$, where n is an integer greater than 1, $C_3$ indicates a quantity of channels of the third feature matrix, $h_3$ indicates a height of the third feature matrix, and $w_3$ indicates a width of the third feature matrix. The pixel shuffle layer is configured to separately perform upsampling on the height and the width of the third feature matrix. A feature matrix output by the pixel shuffle layer is the second feature matrix.

In a possible implementation, the $s\times$ upsampling processing sequentially includes a second convolutional layer and a deconvolutional layer for $s\times$ upsampling. A third feature matrix output by the second convolutional layer and the first feature matrix meet the following conditions: $C_3 = nC_{in}$, $h_3 = h_{in}$, and $w_3 = w_{in}$, where n is an integer greater than 1, $C_3$ indicates a quantity of channels of the third feature matrix, $h_3$ indicates a height of the third feature matrix, and $w_3$ indicates a width of the third feature matrix. The deconvolutional layer is configured to separately perform upsampling on the height and the width of the third feature matrix. A feature matrix output by the deconvolutional layer is the second feature matrix.

In a possible implementation, the $s\times$ upsampling processing includes a deconvolutional layer for $s\times$ upsampling. The deconvolutional layer is configured to separately perform upsampling on a height and a width of an input feature matrix. A feature matrix output by the deconvolutional layer is the second feature matrix.

In a possible implementation, the entropy estimation network further includes a first activation function and a second activation function. The first activation function and the second activation function each include an identity operation Identity, rectified linear unit ReLU processing, leaky rectified linear unit LeakyReLU processing, or parametric rectified linear unit PReLU processing.

In a possible implementation, the pointwise operation includes pointwise multiplication, pointwise addition, pointwise subtraction, or pointwise division.

In a possible implementation, the entropy estimation network further includes a third convolutional layer. An input feature matrix of the third convolutional layer is the first feature matrix.

The apparatus in this embodiment may be configured to perform the technical solution in the method embodiment shown in FIG. 8. Implementation principles and technical effects thereof are similar. Details are not described herein again.

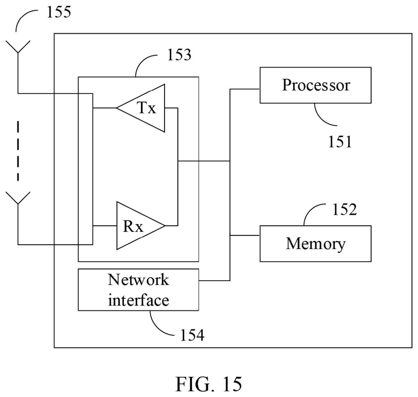

FIG. 15 is a diagram of a structure of an electronic device according to an embodiment of this application. As shown in FIG. 15, the electronic device may serve as the encoder side (or an encoder) or the decoder side (or a decoder) in the foregoing embodiments. The electronic device includes at least one processor 151, at least one memory 152, at least one transceiver 153 (which may also be referred to as a communication interface), at least one network interface 154, and one or more antennas 155. The processor 151, the memory 152, the transceiver 153, and the network interface 154 are connected, for example, connected through a bus. In this embodiment of this application, the connection may include various interfaces, transmission lines, buses, or the like. This is not limited. The antenna 155 is connected to the transceiver 153. The network interface 154 is configured to enable the electronic device to connect to another communication device through a communication link.

The processor 151 is mainly configured to process data, control the entire electronic device, execute a software program, and process data of the software program, for example, is configured to support the electronic device in performing the actions described in the foregoing embodiments. The electronic device may include a baseband processor and a central processing unit. The baseband processor is mainly configured to process a communication protocol and communication data. The central processing unit is mainly configured to control the entire electronic device, execute a software program, and process data of the software program. Functions of the baseband processor and the central processing unit may be integrated into the processor 151 in FIG. 15. A person skilled in the art can understand that the baseband processor and the central processing unit may alternatively be processors independent of each other, and are interconnected through a technology like a bus. A person skilled in the art can understand that the electronic device may include a plurality of baseband processors to adapt to different network standards, and the electronic device may include a plurality of central processing units to enhance a processing capability of the electronic device, and components of the electronic device may be connected through various buses. The baseband processor may also be referred to as a baseband processing circuit or a baseband processing chip. The central processing unit may also be referred to as a central processing circuit or a central processing chip. A function of processing a communication protocol and communication data may be built in the processor, or may be stored in the memory in a form of a software program, and the processor executes the software program to implement a baseband processing function.

The memory 152 is mainly configured to store a software program and data. The memory 152 may exist independently, and is connected to the processor 151. Optionally, the memory 152 and the processor 151 may be integrated together, for example, integrated into one chip. The memory 152 can store program code for performing the technical solutions in embodiments of this application, and execution of the program code is controlled by the processor 151. Various types of executed computer program code may also be considered as a driver of the processor 151.

FIG. 15 shows only one memory and one processor. An actual electronic device may include a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 153 may be configured to support receiving or sending of a radio frequency signal between electronic devices, and the transceiver 153 may be connected to the antenna 155. The transceiver 153 includes a transmitter Tx and a receiver Rx. Specifically, the one or more antennas 155 may receive a radio frequency signal. The receiver Rx of the transceiver 153 is configured to receive the radio frequency signal from the antenna, convert the radio frequency signal into a digital baseband signal or a digital intermediate frequency signal, and provide the digital baseband signal or the digital intermediate frequency signal for the processor 151, so that the processor 151 further processes the digital baseband signal or the digital intermediate frequency signal, for example, performs demodulation and decoding. In addition, the transmitter Tx of the transceiver 153 is further configured to receive a modulated digital baseband signal or digital intermediate frequency signal from the processor 151, convert the modulated digital baseband signal or digital intermediate frequency signal into a radio frequency signal, and send the radio frequency signal through the one or more antennas 155. The digital baseband signal and the digital intermediate frequency signal may be collectively referred to as a digital signal.

The transceiver 153 may also be referred to as a transceiver unit, a transceiver device, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitting device, a transmitter, a transmitter circuit, or the like.

During implementation, the steps in the foregoing method embodiments may be performed by a hardware integrated logic circuit in a processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly performed by a hardware encoding processor, or performed by hardware in an encoding processor in combination with a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and performs the steps of the foregoing methods based on hardware of the processor.

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. By way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the systems and the methods described in this specification is intended to include but is not limited to these memories and any other appropriate type of memory.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application. However, it should not be considered that the implementation goes beyond the scope of embodiments of this application.

It can be clearly understood by a person skilled in the art that, for ease and brevity of description, for detailed working processes of the foregoing systems, apparatuses, and units, reference may be made to corresponding processes in the foregoing method embodiments. Details are not described herein again.

In the several embodiments provided in embodiments of this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (a personal computer, a server, a network device, or the like) to perform all or some of the steps of the methods in embodiments of this application. Alternatively, the computer software product may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive Solid-State Drive (SSD), a read-only memory (read-only memory, ROM), or a random access memory (random access memory, RAM)), or the like.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1.  An entropy estimation method for image compression, comprising:

    obtaining a to-be-processed first feature matrix, wherein a shape of the first feature matrix is $[C_{in}, h_{in}, w_{in}]$, $C_{in}$ indicates a quantity of channels of the first feature matrix, $h_{in}$ indicates a height of the first feature matrix, and $w_{in}$ indicates a width of the first feature matrix; and

    inputting the first feature matrix to an entropy estimation network to obtain a second feature matrix, wherein a shape of the second feature matrix is $[C_{out}, h_{out}, w_{out}]$, $C_{out}$ indicates a quantity of channels of the second feature matrix, $h_{out}$ indicates a height of the second feature matrix, and $w_{out}$ indicates a width of the second feature matrix; the second feature matrix and the first feature matrix meet the following conditions: $C_{out} = C_{in}$, $h_{out} = s \cdot h_{in}$, and $w_{out} = s \cdot w_{in}$, wherein s is an integer greater than 1; and the entropy estimation network comprises a first convolutional layer and a pointwise operation, wherein the first convolutional layer comprises two types of convolution processing, one of the two types of convolution processing is two-dimensional group convolution, and an input of the pointwise operation is respective outputs of the two types of convolution processing.

2.  The method according to claim 1, wherein an input feature matrix and an output feature matrix of the two-dimensional group convolution meet the following conditions: $h_1 = t \cdot h_2$, $w_1 = t \cdot w_2$, and $C_1$ and $C_2$ are exactly divisible by G, wherein t is an integer greater than 1, $C_1$ indicates a quantity of channels of the input feature matrix, $h_1$ indicates a height of the input feature matrix, $w_1$ indicates a width of the input feature matrix, $C_2$ indicates a quantity of channels of the output feature matrix, $h_2$ indicates a height of the output feature matrix, $w_2$ indicates a width of the output feature matrix, and G indicates a quantity of groups, and is used to control a connection between the input feature matrix and the output feature matrix.

3.  The method according to claim 1 or 2, wherein the entropy estimation network further comprises s× upsampling processing.

4.  The method according to claim 3, wherein the s× upsampling processing sequentially comprises a second convolutional layer and a pixel shuffle layer; a third feature matrix output by the second convolutional layer and the first feature matrix meet the following conditions: $C_3 = nC_{in}$, $h_3 = h_{in}$, and $w_3 = w_{in}$, wherein n is an integer greater than 1, $C_3$ indicates a quantity of channels of the third feature matrix, $h_3$ indicates a height of the third feature matrix, and $w_3$ indicates a width of the third feature matrix; the pixel shuffle layer is configured to separately perform upsampling on the height and the width of the third feature matrix; and a feature matrix output by the pixel shuffle layer is the second feature matrix.

5.  The method according to claim 3, wherein the s× upsampling processing sequentially comprises a second convolutional layer and a deconvolutional layer for s× upsampling; a third feature matrix output by the second convolutional layer and the first feature matrix meet the following conditions: $C_3 = nC_{in}$, $h_3 = h_{in}$, and $w_3 = w_{in}$, wherein n is an integer greater than 1, $C_3$ indicates a quantity of channels of the third feature matrix, $h_3$ indicates a height of the third feature matrix, and $w_3$ indicates a width of the third feature matrix; the deconvolutional layer is configured to separately perform upsampling on the height and the width of the third feature matrix; and a feature matrix output by the deconvolutional layer is the second feature matrix.

6.  The method according to claim 3, wherein the s× upsampling processing comprises a deconvolutional layer for s× upsampling, the deconvolutional layer is configured to separately perform upsampling on a height and a width of an input feature matrix, and a feature matrix output by the deconvolutional layer is the second feature matrix.

7.  The method according to any one of claims 1 to 6, wherein the entropy estimation network further comprises a first activation function and a second activation function, and the first activation function and the second activation function each comprise an identity operation Identity, rectified linear unit ReLU processing, leaky rectified linear unit LeakyReLU processing, or parametric rectified linear unit PReLU processing.

8. The method according to any one of claims 1 to 7, wherein the pointwise operation comprises pointwise multiplication, pointwise addition, pointwise subtraction, or pointwise division.

9. The method according to any one of claims 1 to 8, wherein the entropy estimation network further comprises a third convolutional layer, and an input feature matrix of the third convolutional layer is the first feature matrix.

10. The method according to any one of claims 1 to 9, wherein s=4.

11. An entropy estimation apparatus for image compression, comprising:

an obtaining module, configured to obtain a to-be-processed first feature matrix, wherein a shape of the first feature matrix is $[C_{in}, h_{in}, w_{in}]$, $C_{in}$ indicates a quantity of channels of the first feature matrix, $h_{in}$ indicates a height of the first feature matrix, and $w_{in}$ indicates a width of the first feature matrix; and
a processing module, configured to input the first feature matrix to an entropy estimation network to obtain a second feature matrix, wherein a shape of the second feature matrix is $[C_{out}, h_{out}, W_{out}]$, $C_{out}$ indicates a quantity of channels of the second feature matrix, $h_{out}$ indicates a height of the second feature matrix, and $w_{out}$ indicates a width of the second feature matrix; the second feature matrix and the first feature matrix meet the following conditions: $C_{out} = C_{in}$, $h_{out} = s \cdot h_{in}$, and $w_{out} = s \cdot w_{in}$, wherein s is an integer greater than 1; and the entropy estimation network comprises a first convolutional layer and a pointwise operation, wherein the first convolutional layer comprises two types of convolution processing, one of the two types of convolution processing is two-dimensional group convolution, and an input of the pointwise operation is respective outputs of the two types of convolution processing.

12. The apparatus according to claim 11, wherein an input feature matrix and an output feature matrix of the two-dimensional group convolution meet the following conditions: $h_1 = t \cdot h_2$, $w_1 = t \cdot w_2$, and $C_1$ and $C_2$ are exactly divisible by G, wherein t is an integer greater than 1, $C_1$ indicates a quantity of channels of the input feature matrix, $h_1$ indicates a height of the input feature matrix, $w_1$ indicates a width of the input feature matrix, $C_2$ indicates a quantity of channels of the output feature matrix, $h_2$ indicates a height of the output feature matrix, $w_2$ indicates a width of the output feature matrix, and G indicates a quantity of groups, and is used to control a connection between the input feature matrix and the output feature matrix.

13. The apparatus according to claim 11 or 12, wherein the entropy estimation network further comprises s× upsampling processing.

14. The apparatus according to claim 13, wherein the s× upsampling processing sequentially comprises a second convolutional layer and a pixel shuffle layer; a third feature matrix output by the second convolutional layer and the first feature matrix meet the following conditions: $C_3 = nC_{in}$, $h_3 = h_{in}$, and $w_3 = w_{in}$, wherein n is an integer greater than 1, $C_3$ indicates a quantity of channels of the third feature matrix, $h_3$ indicates a height of the third feature matrix, and $w_3$ indicates a width of the third feature matrix; the pixel shuffle layer is configured to separately perform upsampling on the height and the width of the third feature matrix; and a feature matrix output by the pixel shuffle layer is the second feature matrix.

15. The apparatus according to claim 13, wherein the s× upsampling processing sequentially comprises a second convolutional layer and a deconvolutional layer for s× upsampling; a third feature matrix output by the second convolutional layer and the first feature matrix meet the following conditions: $C_3 = nC_{in}$, $h_3 = h_{in}$, and $w_3 = w_{in}$, wherein n is an integer greater than 1, $C_3$ indicates a quantity of channels of the third feature matrix, $h_3$ indicates a height of the third feature matrix, and $w_3$ indicates a width of the third feature matrix; the deconvolutional layer is configured to separately perform upsampling on the height and the width of the third feature matrix; and a feature matrix output by the deconvolutional layer is the second feature matrix.

16. The apparatus according to claim 13, wherein the s× upsampling processing comprises a deconvolutional layer for s× upsampling, the deconvolutional layer is configured to separately perform upsampling on a height and a width of an input feature matrix, and a feature matrix output by the deconvolutional layer is the second feature matrix.

17. The apparatus according to any one of claims 11 to 16, wherein the entropy estimation network further comprises a first activation function and a second activation function, and the first activation function and the second activation function each comprise an identity operation Identity, rectified linear unit ReLU processing, leaky rectified linear unit LeakyReLU processing, or parametric rectified linear unit PReLU processing.

18. The apparatus according to any one of claims 11 to 17, wherein the pointwise operation comprises pointwise multiplication, pointwise addition, pointwise subtraction, or pointwise division.

19. The apparatus according to any one of claims 11 to 18, wherein the entropy estimation network further comprises a third convolutional layer, and an input feature matrix of the third convolutional layer is the first feature matrix.

20. The apparatus according to any one of claims 11 to 19, wherein s=4.

21. An encoder, comprising:

   one or more processors; and
   a non-transitory computer-readable storage medium, coupled to the processor and storing a program to be executed by the processor, wherein when the program is executed by the processor, the encoder is enabled to perform the method according to any one of claims 1 to 10.

22. A decoder, comprising:

   one or more processors; and
   a non-transitory computer-readable storage medium, coupled to the processor and storing a program to be executed by the processor, wherein when the program is executed by the processor, the decoder is enabled to perform the method according to any one of claims 1 to 10.

23. A computer-readable storage medium, comprising instructions, wherein when the instructions are run on a computer, the computer is enabled to perform the method according to any one of claims 1 to 10.

FIG. 1

FIG. 2

Camera → Image/Video → AI-based image/video encoding → Storage/ Transmission → AI-based image/video decoding → Reconstructed image/video

FIG. 3

Camera → Image/Video → AI-based encoding unit (NPU) → Entropy estimation unit (NPU) → Entropy encoding (CPU) → File storage (CPU) → File

Compression process

- - - - - - - - - - - - - - - - - - - - - - - - - - - - - - - - - - - - - - - - - - - - - -

Decompression process

Reconstructed image/video ← AI-based decoding unit (NPU) ← Entropy decoding (CPU) ← Entropy estimation unit (NPU) ← File loading (CPU) ← File

FIG. 4

EP 4 697 271 A1

**Compression process**

Original image → JPEG encoding (CPU) → [Local | Cloud] Upload → JPEG decoding (CPU) → AI-based encoding unit (GPU) → Entropy estimation unit (NPU) → Entropy encoding (CPU) → File storage (CPU) → File

**Decompression process**

File → File loading (CPU) → Entropy estimation unit (NPU) → Entropy decoding (CPU) → AI-based decoding unit (GPU) → JPEG encoding (CPU) → Download → JPEG decoding (CPU) → Display on a terminal

FIG. 5

```
┌──────────┐   ┌──────────────┐   ┌──────────┐   ┌──────────────┐   ┌──────────┐
│  Video   │   │ Video stream │   │  Video   │   │ Video stream │   │ Content  │
│ encoding │──▶│ transmission │──▶│  stream  │──▶│ media packet │──▶│ delivery │
│          │   │              │   │transcoding│   │              │   │ network  │
└──────────┘   └──────────────┘   └──────────┘   └──────────────┘   └──────────┘
     ▲                │                 ▲                                   │
     │                │                 │                                   │
     │                ▼                 │                                   ▼
┌──────────┐   ┌──────────────┐                                     ┌──────────┐
│ Content  │   │    Video     │                                     │A plurality│
│ creation │   │    stream    │                                     │  of OTT  │
│          │   │   storage    │                                     │ devices  │
└──────────┘   └──────────────┘                                     └──────────┘
```

FIG. 6

FIG. 7

800

```
┌─────────────────────────────────┐
│ Obtain a to-be-processed first   │ ⌇ 801
│          feature matrix          │
└─────────────────────────────────┘
                 │
                 ▼
┌─────────────────────────────────┐
│ Input the first feature matrix to│
│  an entropy estimation network to│ ⌇ 802
│   obtain a second feature matrix │
└─────────────────────────────────┘
```

FIG. 8

First feature matrix

Third convolutional layer

First activation function

First convolutional layer

Convolution 1 | Convolution 2

Pointwise operation

Second activation function

s× upsampling processing

Second feature matrix

FIG. 9

$$z[C, h_{in}, w_{in}]$$

| qConv(1*1,C,C1) |
|---|

| Activation function a |
|---|

| qConv(1*1,C1,C2) | qConv(3*3,C1,C2,G=g) |
|---|---|

| Pointwise operation a |
|---|

| Activation function b |
|---|

| qConv(1*1,C2,16C) |
|---|

| PixelShuffle(4) |
|---|

| ABS() |
|---|

$$\sigma[C, 4h_{in}, 4w_{in}]$$

FIG. 10a

$z[C,h_{in},w_{in}]$

| $Conv(1*1,C,C3)$ |
| --- |
| Activation function c |

| $Conv(1*1,C3,C4)$ | $Conv(3*3,C3,C4,G=g)$ |
| --- | --- |

| Pointwise operation b |
| --- |
| Activation function d |
| $Conv(1*1,C4,16C)$ |
| PixelShuffle(4) |

$p[C,4h_{in},4w_{in}]$

FIG. 10b

$z[C,h_{in},w_{in}]$

| $qConv(1*1,C,C1)$ |
| --- |
| ReLU |

| $qConv(1*1,C1,C2)$ | $qConv(3*3,C1,C2,G=g)$ |
| --- | --- |

| EMUL |
| --- |
| ReLU |
| $qConv(1*1,C2,16C)$ |
| PixelShuffle(4) |
| ABS() |

$\sigma[C,4h_{in},4w_{in}]$

FIG. 11a

$$z[C, h_{in}, w_{in}]$$

| Conv(1*1,C,C3) |
|---|

| LeakyReLU |
|---|

| Conv(1*1,C3,C4) | Conv(3*3,C3,C4,G=g) |
|---|---|

| EMUL |
|---|

| LeakyReLU |
|---|

| Conv(1*1,C4,16C) |
|---|

| PixelShuffle(4) |
|---|

$$p[C, 4h_{in}, 4w_{in}]$$

## FIG. 11b

$$z[C, h_{in}, w_{in}]$$

| qConv(1*1,C,C1) |
|---|

| Activation function a |
|---|

| qConv(1*1,C1,C2) | qConv(3*3,C1,C2,G=g) |
|---|---|

| Pointwise operation a |
|---|

| Activation function b |
|---|

| qConv(1*1,C2,16C) |
|---|

| $qConv^{-1}(4*4,16C,C,stride=4)$ |
|---|

| ABS() |
|---|

$$\sigma[C, 4h_{in}, 4w_{in}]$$

## FIG. 12a

$$z[C,h_{in},w_{in}]$$

| Conv(1*1,C,C3) |
| Activation function c |

| Conv(1*1,C3,C4) | Conv(3*3,C3,C4,G=g) |

| Pointwise operation b |
| Activation function d |
| Conv(1*1,C4,16C) |
| Conv$^{-1}$(4*4,16C,C,stride=4) |

$$p[C,4h_{in},4w_{in}]$$

## FIG. 12b

$$z[C,h_{in},w_{in}]$$

| qConv(1*1,C,C1) |
| Activation function a |

| qConv(1*1,C1,C2) | qConv(3*3,C1,C2,G=g) |

| Pointwise operation a |
| Activation function b |

| qConv$^{-1}$(4*4,C2,C,stride=4) |
| ABS() |

$$\sigma[C,4h_{in},4w_{in}]$$

## FIG. 13a

$$z[C, h_{in}, w_{in}]$$

| |
|:---:|
| $Conv(1*1, C, C3)$ |
| Activation function c |

| | |
|:---:|:---:|
| $Conv(1*1, C3, C4)$ | $Conv(3*3, C3, C4, G=g)$ |

| |
|:---:|
| Pointwise operation b |
| Activation function d |

| |
|:---:|
| $Conv^{-1}(4*4, C4, C, stride=4)$ |

$$p[C, 4h_{in}, 4w_{in}]$$

FIG. 13b

```
                                      1400

       1401            1402


   ┌──────────┐    ┌──────────┐
   │          │    │          │
   │          │    │          │
   │ Obtaining│    │Processing│
   │  module  │    │  module  │
   │          │    │          │
   │          │    │          │
   └──────────┘    └──────────┘
```

FIG. 14

FIG. 15

## INTERNATIONAL SEARCH REPORT

| International application No. |
| --- |
| **PCT/CN2024/102281** |

### A. CLASSIFICATION OF SUBJECT MATTER

G06T9/00(2006.01)i; H04N19/91(2014.01)i

According to International Patent Classification (IPC) or to both national classification and IPC

### B. FIELDS SEARCHED

Minimum documentation searched (classification system followed by classification symbols)

IPC: G06T, H04N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 图像, 压缩, 编码, 解码, 卷积, 逐点运算, 相乘, 相加, 相减, 相除, 相邻, 注意力, 通道, 上采样, 分组, 像素混洗, 亚像素, image, compression, encod+, decod+, convolution, point by point, operation, multiply, add+, subtract, divide, neighbor, attention, channels, up sampl+, group, pixel shuffle, sub pixel

### C. DOCUMENTS CONSIDERED TO BE RELEVANT

| Category* | Citation of document, with indication, where appropriate, of the relevant passages | Relevant to claim No. |
| --- | --- | --- |
| Y | CN 115086680 A (SHANGHAI SHUANGSHEN INFORMATION TECHNOLOGY CO., LTD.) 20 September 2022 (2022-09-20)<br>description, paragraphs 0001-0065, and figures 1-6 | 1-23 |
| Y | CN 115661515 A (SUZHOU INSTITUTE OF BIOMEDICAL ENGINEERING AND TECHNOLOGY, CHINESE ACADEMY OF SCIENCES et al.) 31 January 2023 (2023-01-31)<br>description, paragraph 0004, and figures 1-5 | 1-23 |
| A | CN 116260983 A (HUAWEI TECHNOLOGIES CO., LTD.) 13 June 2023 (2023-06-13)<br>entire document | 1-23 |
| A | CN 106709875 A (BEIJING UNIVERSITY OF TECHNOLOGY) 24 May 2017 (2017-05-24)<br>entire document | 1-23 |
| A | WO 2023098688 A1 (HUAWEI TECHNOLOGIES CO., LTD.) 08 June 2023 (2023-06-08)<br>entire document | 1-23 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 September 2024** | **11 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/102281**

| Patent document cited in search report | | | Publication date (day/month/year) | Patent family member(s) | Publication date (day/month/year) |
|---|---|---|---|---|---|
| CN | 115086680 | A | 20 September 2022 | None | |
| CN | 115661515 | A | 31 January 2023 | None | |
| CN | 116260983 | A | 13 June 2023 | None | |
| CN | 106709875 | A | 24 May 2017 | None | |
| WO | 2023098688 | A1 | 08 June 2023 | None | |

Form PCT/ISA/210 (patent family annex) (July 2022)